# EUROPEAN PATENT APPLICATION

(11) **EP 4 742 805 A1**
(43) Date of publication of application: **13.05.2026**
(21) Application number: 23953795.4
(22) Date of filing: 28.09.2023
(51) Int. Cl.: H04W 72/541

(54) **INFORMATION SENDING METHOD AND APPARATUS, INFORMATION RECEIVING METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); LI, Yapu, Dongguan, Guangdong 523860 (CN); GAO, Ning, Dongguan, Guangdong 523860 (CN); LU, Liuming, Dongguan, Guangdong 523860 (CN)
(74) Representative: Novagraaf Technologies
(86) International application number: PCT/CN2023/122959
(87) International publication number: WO 2025/065651

(57) **Abstract**

The present application relates to the field of wireless communications. Disclosed are an information sending method and apparatus, an information receiving method and apparatus, and a device and a storage medium. The information sending method comprises: sending first information and/or second information in uplink transmission, wherein the first information is used for indicating interference to which a station is subjected, and the second information is used for instructing the station to adjust a working channel under an interference condition.

## Description

### TECHNICAL FIELD

The present disclosure relates to the field of wireless communications, and in particular, relates to a method and apparatus for transmitting information, a method and apparatus for receiving information, a device, and a storage medium.

### RELATED ART

In a wireless local area network (WLAN), a basic service set (BSS) structure is adopted.

A basic BSS uses an access point (AP) to provide a network access service for a station (STA). In a dense WLAN deployment scenario, overlapping coverage areas of a plurality of APs significantly increase, and a plurality of BSSs become overlapping basic service sets (OBSSs) of each other. STAs in the overlapping coverage area can receive signals from a plurality of APs, leading to mutual interference.

### SUMMARY

Embodiments of the present disclosure provide a method and apparatus for transmitting information, a method and apparatus for receiving information, a device, and a storage medium, so as to provide solutions applicable to scenarios involving inconsistent overlapping basic service set (OBSS) interference or non-OBSS interference. The technical solutions are as follows.

According to an aspect of the present disclosure, a method for transmitting information is provided. The method is performed by a station. The method includes: sending first information and/or second information of the station in uplink transmission; wherein the first information is used to indicate interference to the station, and the second information is used to indicate an adjustment of an operating channel by the station in the case of interference.

According to an aspect of the present disclosure, a method for receiving information is provided. The method is performed by an access point. The method includes: receiving first information and/or second information of a station in uplink transmission, wherein the first information is used to indicate interference to the station, and the second information is used to indicate an adjustment of an operating channel by the station in the case of interference.

According to an aspect of the present disclosure, an apparatus for transmitting information is provided. The apparatus includes:
a sending module, configured to send first information and/or second information of a station in uplink transmission, wherein the first information is used to indicate interference to the station, and the second information is used to indicate an adjustment of an operating channel by the station in the case of interference.

According to an aspect of the present disclosure, an apparatus for receiving information is provided. The apparatus includes:
a receiving module, configured to receive first information and/or second information of a station in uplink transmission, wherein the first information is used to indicate interference to the station, and the second information is used to indicate an adjustment of an operating channel by the station in the case of interference.

According to an aspect of the present disclosure, a station is provided. The station includes: a processor; a transceiver, connected to the processor; and a memory, configured to store an instruction executable by the processor. The processor, when loading and executing the instruction, is caused to perform the method for transmitting information as described above.

According to an aspect of the present disclosure, an access point is provided. The access point includes: a processor; a transceiver, connected to the processor; and a memory, configured to store an instruction executable by the processor. The processor, when loading and executing the instruction, is caused to perform the method for receiving information as described above.

According to an aspect of the present disclosure, a computer-readable storage medium is provided. The computer-readable storage medium stores an executable instruction. The executable instruction, when loaded and executed by a processor, cause the processor to perform the method for transmitting information, and/or the method for receiving information as described above.

According to an aspect of the present disclosure, a computer program product is provided. The computer program product includes a computer instruction stored in a computer-readable storage medium. The computer instruction, when read by a processor of a computer device from the computer-readable storage medium and executed by the processor, cause the computer device to perform the method for transmitting information, and/or the method for receiving information as described above.

According to an aspect of the present disclosure, a chip including a programmable logic circuit and/or a program instruction is provided. The chip, when running the programmable logic circuit and/or the program instruction, is caused to perform the method for transmitting information, and/or the method for receiving information as described above.

According to an aspect of the present disclosure, a computer program is provided. The computer program includes a computer instruction. The computer instruction, when executed by a processor of a computer device, cause the computer device to perform the method for transmitting information, and/or the method for receiving information as described above.

The technical solutions according to the embodiments of the present disclosure achieve at least following beneficial effects.

The first information and/or the second information of the station is sent in the uplink transmission, wherein the first information is used to indicate the interference to the station, and the second information is used to indicate the adjustment of at least one operating channel by the station, such that the station is capable of actively reporting the interference information, or actively adjusting the operating channel in the case of interference, and actively reporting the adjustment information of the operating channel to the access point. Since the method performs reporting or adjustment at the station granularity, the method is applicable to scenarios involving inconsistent OBSS interference or non-OBSS interference.

In an OBSS interference scenario, in a case where the station experiences the OBSS interference and the access point does not receive the OBSS interference, the station actively reports the first information and/or the second information, such that the access point can be triggered to perform or coordinate subsequent operating channel adjustments.

In a non-OBSS interference scenario, in acase where the station experiences the intra-device interference, the station actively reports the first information and/or the second information, such that the access point can be triggered to perform or coordinate subsequent operating channel adjustments.

### BRIEF DESCRIPTION OF DRAWINGS

To describe the technical solutions in embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.
FIG. 1 illustrates a schematic diagram of a dynamic subband operation in a related art;
FIG. 2 illustrates a schematic structural diagram of a Wi-Fi system in a related art;
FIG. 3 illustrates a schematic diagram of a scenario in which OBSS interference of a STA is inconsistent with that of an AP in a related art;
FIG. 4 illustrates a schematic flowchart of a method for transmitting information according to some exemplary embodiments of the present disclosure;
FIG. 5 illustrates a schematic flowchart of a method for transmitting information according to some exemplary embodiments of the present disclosure;
FIG. 6 illustrates a schematic flowchart of a method for transmitting information according to some exemplary embodiments of the present disclosure;
FIG. 7 illustrates a schematic flowchart of a method for receiving information according to some exemplary embodiments of the present disclosure;
FIG. 8 illustrates a schematic flowchart of a method for receiving information according to some exemplary embodiments of the present disclosure;
FIG. 9 illustrates a schematic flowchart of a method for receiving information according to some exemplary embodiments of the present disclosure;
FIG. 10 illustrates a message sequence chart in a scenario of adjusting an operating channel according to some exemplary embodiments of the present disclosure;
FIG. 11 illustrates a message sequence chart in a scenario of adjusting an operating channel according to some exemplary embodiments of the present disclosure;
FIG. 12 illustrates a message sequence chart in a scenario of adjusting an operating channel according to some exemplary embodiments of the present disclosure;
FIG. 13 illustrates a message sequence chart in a scenario of adjusting an operating channel according to some exemplary embodiments of the present disclosure;
FIG. 14 illustrates a message sequence chart in a scenario of adjusting an operating channel according to some exemplary embodiments of the present disclosure;
FIG. 15 illustrates a message sequence chart in a scenario of adjusting an operating channel according to some exemplary embodiments of the present disclosure;
FIG. 16 illustrates a message sequence chart in a scenario of adjusting an operating channel according to some exemplary embodiments of the present disclosure;
FIG. 17 illustrates a message sequence chart in a scenario of adjusting an operating channel according to some exemplary embodiments of the present disclosure;
FIG. 18 illustrates a message sequence chart in a scenario of adjusting an operating channel according to some exemplary embodiments of the present disclosure;
FIG. 19 illustrates a message structural diagram of a block acknowledgment (Block ACK, BA) frame according to some exemplary embodiments of the present disclosure;
FIG. 20 illustrates a message structural diagram of a data frame or a management frame including an A-Control field according to some exemplary embodiments of the present disclosure;
FIG. 21 illustrates a message structural diagram of a data frame or a management frame including an A-Control field according to some exemplary embodiments of the present disclosure;
FIG. 22 illustrates a message structural diagram of a newly defined management frame according to some exemplary embodiments of the present disclosure;
FIG. 23 illustrates a message structural diagram of a multiuser request-to-send (MU-RTS) frame according to some exemplary embodiments of the present disclosure;
FIG. 24 illustrates a message structural diagram of a basic trigger frame according to some exemplary embodiments of the present disclosure;
FIG. 25 illustrates a structural block diagram of an apparatus for transmitting information according to some exemplary embodiments of the present disclosure;
FIG. 26 illustrates a structural block diagram of an apparatus for combined-searching information according to some exemplary embodiments of the present disclosure; and
FIG. 27 illustrates a schematic structural diagram of a wireless device according to some exemplary embodiments of the present disclosure.

### DETAILED DESCRIPTION

For clearer descriptions of the objectives, technical solutions, and advantages of the present disclosure, the embodiments of the present disclosure are described hereinafter in detail with reference to the drawings. The exemplary embodiments are described in detail here, and their examples are shown in the accompanying drawings. When the following description relates to the accompanying drawings, the same numerals in different drawings represent the same or similar elements, unless otherwise indicated. The embodiments described in the following exemplary embodiments do not represent all the embodiments consistent with the present disclosure. Rather, they are merely examples of devices and methods that are consistent with some aspects of the present disclosure as detailed in the appended claims.

The terms used in the present disclosure are solely for the purpose of describing specific embodiments and are not intended to limit the present disclosure. The singular forms "a," "an," and "the" used in the present disclosure and the appended claims are also intended to encompass their plural forms, unless the context clearly indicates otherwise. It should also be understood that the term "and/or" as used herein refers to and includes any or all possible combinations of one or more of the associated listed items.

It should be understood that although terms such as "first," "second," and "third" may be used in the present disclosure to describe various information, such information should not be limited by these terms. These terms are only used to distinguish information of the same type from each other. For example, without departing from the scope of the present disclosure, first information may also be referred to as second information, and similarly, second information may also be referred to as first information. The term "if" as used herein may be interpreted as "in a case where," "when," or "in response to determining" depending on the context. In this specification, when expressing the meaning of a Boolean value, '0' represents 'first meaning,' and '1' represents 'second meaning.' Without loss of generality, those skilled in the art may understand that their represented meanings may be exchanged, i.e., '1' represents 'first meaning,' and '0' represents 'second meaning.'

Firstly, the related art involved in the embodiments of the present disclosure is described hereinafter.

### (1) Basic Service Set (BSS)

BSS is a basic topological structure of a wireless local area network (WLAN). A typical example of BSS is the infrastructure Basic Service Set (infrastructure BSS). The communication devices constituting a infrastructure BSS include an AP and several STAs. Upon joining a wireless domain of the AP, each of the STAs is associated with the AP. Data transmission may be performed between the STAs and the AP, and the STAs may exchange data with each other via the AP.

### (2) Dynamic Subband Operation (DSO)

Related technologies of DSO allow data transmission between an AP and an STA to be conducted in units of transmission opportunities (TXOPs). The AP schedules the STA to operate on one or more secondary channels by transmitting a control frame on the primary channel, and the AP and the STA may perform uplink and/or downlink transmission on the secondary channel.

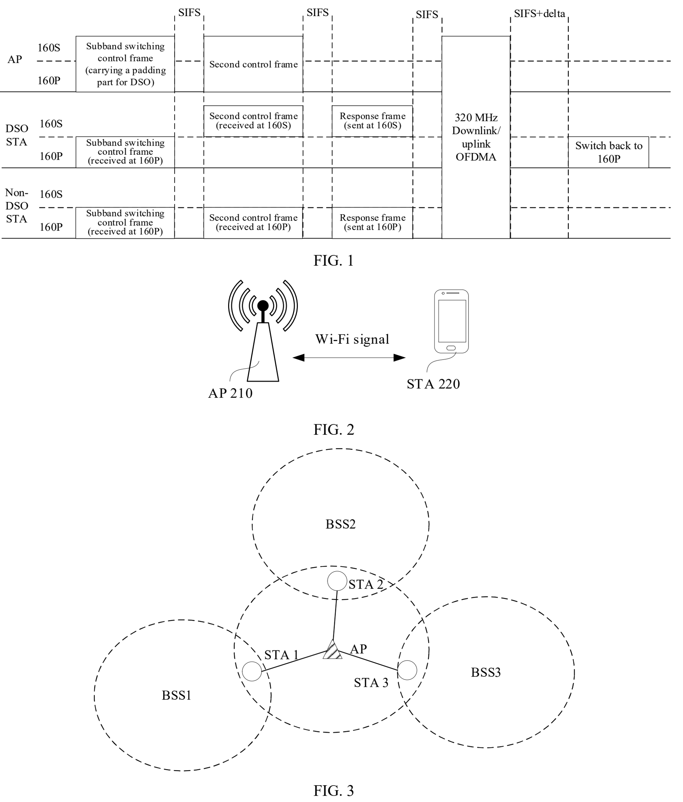

As illustrated in FIG. 1, the AP sends an indication to a DSO-capable non-AP STA at the beginning of any 320 MHz wide TXOP requiring the non-AP STA to transition to the secondary 160 MHz bandwidth for this TXOP and then continues the frame exchange on the secondary 160 MHz bandwidth. The specific steps are as follows:
- The AP sends to the DSO non-AP STA being scheduled, a "subband-switch control frame," which is a special initial control frame (could be a modified MU-RTS frame or a buffer status report polling (BSRP) frame or a newly defined frame) that indicates transition to the secondary 160 MHz.
- The subband-switch control frame has sufficient padding to cover subband switch latency (i.e., latency required by the non-AP STA to switch from the primary 160 MHz to the secondary 160 MHz).

Depending on the negotiated capabilities of the DSO-capable non-AP STA, the following options are possible:
Option 1: The subband-switch initial control frame is used only for subband switch by DSO non-AP STAs and does not elicit any response. Short interframe space (SIFS) later, the AP sends a second control frame (which can be a regular MU-RTS/BSRP frame) that elicits a response in the secondary 160 MHz bandwidth.
Option 2: The subband-switch initial control frame is used for subband switch by DSO non-AP STAs and elicits a response in the secondary 160 MHz bandwidth.

The subband-switch initial control frame may be in non-high throughput (non-HT) duplicate format, again depending on the negotiated capabilities. Thereafter, the DSO TXOP can contain multiple SIFS-spaced downlink (DL)/triggered uplink (UL) exchanges with the DSO non-AP STAs. At the end of the TXOP (for example, detected through a gap of SIFS+delta time), the DSO non-AP STA switches back to operating on the primary 160 MHz bandwidth.

### (3) Internal interference in device

In addition to Wi-Fi communication, other wireless communications may also be present in STA, such as Bluetooth communication and cellular network communication within the STA. The interference of other wireless communications on Wi-Fi communication is considered as internal interference in the STA. Through the interaction between hardware and/or software within the STA device, the occurrence of internal interference can be predicted.

FIG. 2 is a schematic diagram of a Wi-Fi system according to some exemplary embodiments of the present disclosure. The Wi-Fi system includes a group of terminal devices, a group of terminal devices and a network device, or a group of an AP and STAs, which is not limited in the present disclosure. The present disclosure is illustrated by taking a Wi-Fi system that includes an AP 210 and an STA 220 as an example.

In some scenarios, an AP may also be referred to as an "AP STA," which means that an AP is also a type of STA in a sense. In some scenarios, an STA may also be referred to as a "non-AP STA."

In some embodiments, an STA may include an AP STA and a non-AP STA.

Communication in the Wi-Fi system may be conducted between an AP and a non-AP STA, between non-AP STAs, or between an STA and a peer STA. Herein, the peer STA may refer to a device on the opposite end of the STA that communicates with the STA. For example, the peer STA may be an AP or a non-AP STA.

The AP acts as a bridge connected between a wired network and a wireless network, and is mainly used to connect wireless network clients and access the wireless network to the Ethernet. An AP device may be a terminal device equipped with a Wi-Fi chip, or a network device equipped with a Wi-Fi chip.

It should be understood that the role of the STA in the communication system is not particularly defined. For example, in some scenarios, in a case where a mobile phone is connected to a router, the mobile phone is a non-AP STA; or in a case where the mobile phone serves as a hotspot for other phones, the mobile phone acts as an AP.

The AP and the non-AP STA may be devices applied in the Internet of vehicles (IoV), Internet of things (IoT) nodes, sensors, or other components in the IoT, smart cameras, smart remote controllers, smart water/electricity meters in smart homes, as well as sensors and similar devices in smart cities.

In some embodiments, the non-AP STA supports a plurality of current WLAN standards (such as 802.11be, 802.11ax, 802.11ac, 802.11n, 802.11g, 802.11b, and 802.11a) and future WLAN standards in the 802.11 series. The non-AP STA may also be applied in network environments supporting next-generation WLAN systems. The next-generation WLAN systems are evolved from 802.11ax systems and maintain backward compatibility with the 802.11ax systems. The next-generation Wi-Fi communication refers to any new generation Wi-Fi communication beyond Wi-Fi 7 (based on the IEEE 802.11be standard), such as extremely-high throughput (EHT) communication, or ultra-high reliability (UHR) communication. For example, a non-AP STA is a UHR STA.

In some embodiments, the AP may be a device that supports a plurality of current WLAN standards (such as 802.11be, 802.11ax, 802.11ac, 802.11n, 802.11g, 802.11b, and 802.11a) and future WLAN standards in the 802.11 series. The AP may also be applied in network environments supporting next-generation WLAN systems. The next-generation WLAN systems are evolved from 802.11ax systems and maintains backward compatibility with the 802.11ax systems. The next-generation Wi-Fi communication refers to any new generation Wi-Fi communication beyond Wi-Fi 7 (based on the IEEE 802.11be standard), such as EHT communication, or UHR communication. For example, an AP is a UHR AP.

In the embodiments of the present disclosure, the STA may include one of the following devices that support WLAN/wireless fidelity (Wi-Fi): a mobile phone, a tablet computer (e.g., pad), an e-book reader, a laptop, a desktop computer, a TV, a virtual reality (VR) device, an augmented reality (AR) device, a mediated reality (MR) device, an extended reality (XR) device, a baffle reality (BR) device, a cinematic reality (CR) device, a deceive reality (DR) device, a wireless device in industrial control, a set-top box, a wireless device in self-driving, a vehicle communication device, a wireless device in remote medical, a wireless device in smart grid, a wireless device in transportation safety, a wireless device in smart city, a wireless device in smart home, a wireless communication chip, an application-specific integrated circuit (ASIC), or a system on chip (SoC), or the like.

The Wi-Fi system in the embodiments of the present disclosure supports frequency bands, including but not limited to, low-frequency bands (e.g., 2.4 GHz, 5 GHz, or 6 GHz) and high-frequency bands (e.g., 45 GHz or 60 GHz).

One or more links may be present between an STA and an AP.

In some embodiments, the STA and the AP support multi-band communication, such as simultaneous communication in 2.4 GHz, 5 GHz, 6 GHz, as well as 45 GHz, and 60 GHz frequency bands, or simultaneous communication on different channels within the same or different frequency bands, to improve communication throughput and/or reliability between devices. Such devices are typically referred to as multi-band devices or multi-link devices (MLDs), and sometimes referred to as multi-link entities or multi-band entities. An MLD may be an AP device or an STA device. In a case where the MLD is an AP device, the MLD includes one or more APs. In a case where the MLD is an STA device, the MLD includes one or more non-AP STAs.

An MLD that includes one or more APs is referred to as an "AP." An MLD that includes one or more non-AP STAs is referred to as a "non-AP." In the embodiments of the present disclosure, a "non-AP" may be referred to as an "STA."

In some embodiments, STAs exist in the form of one or more BSSs. A BSS is a collection of STAs that may be successfully synchronized to communicate with each other. A BSS may or may not include an AP.

In some embodiments, an AP may include a plurality of APs, and a non-AP may include a plurality of STAs. A plurality of links may be formed between APs in the AP and STAs in the non-AP. Communication may be conducted between APs in the AP and their corresponding STAs in the non-AP via corresponding links.

In some embodiments, an AP is a device deployed in a WLAN/Wi-Fi system to provide wireless communication functions for STAs. An STA may be a user equipment (UE), an access terminal, a subscriber unit, a subscriber station, a mobile site, a mobile station, a remote station, a remote terminal, a mobile device, a wireless communication device, a user agent, or a user device. The STA may also be a cellular phone, a cordless phone, a Session Initiation Protocol (SIP) phone, wireless local loop (WLL) station, a personal digital assistant (PDA), a handheld device with wireless communication functions, a computing device, any other processing device connected to a wireless modem, a vehicle-mounted device, or a wearable device, which are not limited in the present disclosure.

In some embodiments, both the AP and the STA support the IEEE 802.11 standard, but are not limited thereto.

FIG. 3 illustrates a schematic diagram of a scenario in which OBSS interference is inconsistent according to some exemplary embodiments of the present disclosure. In some cases, the STA and the AP are subjected to differenct OBSS interference. As shown in FIG. 3, STA 1 is interfered with by BSS 1, STA 2 is interfered with by BSS 2, and STA 3 is interfered with by BSS 3; however, APs associated therewith are not interfered with by BSS 1, BSS 2, and BSS 3. OBSS interference is typically detected in real time and is not predicted long (for example, tens of milliseconds) in advance. That is, the STA typically detects the OBSS interference only after the interference has occurred or the interference is about to occur very soon (for example, less than one millisecond). In one aspect, this type of OBSS interference detected in real time is difficult to avoid through pre-scheduling. In another aspect, since the AP is not subjected to OBSS interference, the AP lacks a trigger condition for actively scheduling to a secondary channel, and the STA needs to trigger the AP to schedule to an interference-free subchannel for transmission in a case of detecting the OBSS interference.

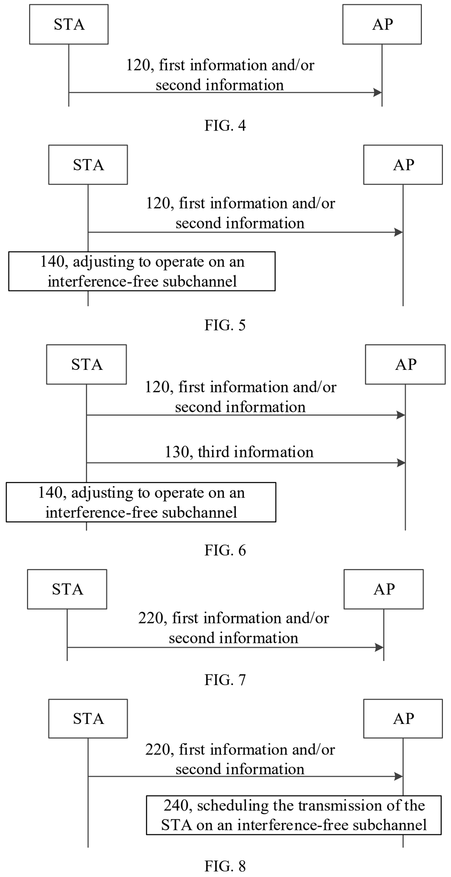

FIG. 4 illustrates a schematic flowchart of a method for transmitting information according to some exemplary embodiments of the present disclosure. Taking the example where the method is performed by an STA, the method includes at least part of following processes.

**In process 120,** first information and/or second information are sent in uplink transmission.

The operating channel of the STA includes at least one subchannel, wherein the at least one subchannel includes one primary channel and at least zero secondary channel. The primary channel and the secondary channel have the same or different bandwidths. In a case where at least two secondary channels are present, the bandwidths of the secondary channels are the same or different.

The first information is used to indicate interference to the STA, and the first information may also be referred to as interference information or interference indication information. The second information is used to indicate the adjustment of the operating channel by the STA in the case of interference, and the second information may also be referred to as other names such as operating channel information, operating channel adjustment information, operating channel switching information, or operating channel indication information.

In some embodiments, the interference refers to OBSS interference or intra-device interference. In some embodiments, the OBSS interference is consistent OBSS interference for both the STA and the AP, or inconsistent OBSS interference for the STA and the AP. In the embodiments of the present disclosure, an example in which the OBSS interference is inconsistent OBSS interference for the STA and the AP is used for description.

**With respect to the first information:**
The first information is used to indicate interference to the STA. The interference is the interference that the STA is currently experiencing, or the interference that the STA expects to experience.

In some embodiments, the first information includes at least one of following information: an interference source, periodic interference or aperiodic interference, an expected duration of the interference, an expected start time of the interference, an expected end time of the interference, or an interfered subchannel.

The interference source includes at least one of: OBSS interference, intra-device interference, or interference of an unknown type. The periodic interference refers to interference that periodically occurs in a period of time, and the aperiodic interference refers to interference that does not follow a periodic pattern. The expected duration of the interference is the duration that the STA expects the interference to last, and an deviation may be present between the expected duration and the actual duration of the interference. The expected start time of the interference is the time at which the STA expects the interference to start, and an deviation may be present between the expected start time and the actual start time of the interference. The expected end time of the interference is the time at which the STA expects the interference to end. The interfered subchannel is a subchannel being interfered with.

In some embodiments, the first information is carried in at least one of following information: a request-to-send (RTS) frame, a block acknowledgment (Block ACK, BA) frame, an acknowledgment (ACK) frame, A-Control of a data frame, A-Control of a management frame, an A-Control field of an additional quality of service null (QoS Null) frame, or an additional management frame.

In some embodiments, the first information is carried in any one of the above information. In some embodiments, the first information is split into at least two pieces of sub-information. Each piece of sub-information is carried in any one of the above information, and the first information is carried in a plurality of pieces of information of the same type or different types.

In some embodiments, the first information is carried in: a Block Acknowledgment Control field of the BA frame, or control information of an A-Control field of the data frame or the management frame, or an Action field of the management frame.

**With respect to the second information:**
The second information is used to indicate the adjustment of the operating channel by the STA in the case of interference. The adjustment is used to adjust the operating channel of the STA to an interference-free subchannel for operation. In some embodiments, the second information is used to indicate an adjustment that the STA has performed, will perform, or is expected to perform.

In some embodiments, the second information is used to indicate the adjustment of the operating channel by the STA in a case of OBSS interference, for example, the adjustment of the operating channel by the STA in a case of inconsistent OBSS interference. In some embodiments, the second information is used to indicate the adjustment of the operating channel by the STA in a case of intra-device interference.

In some embodiments, the second information is used to indicate the adjustment of the operating channel before the interference occurs or during the interference. In some embodiments, the second information is used to indicate the adjustment (or restoration) of the operating channel after the interference ends.

In some embodiments, the second information is used to indicate the adjustment of the operating channel before the interference occurs or during the interference. The second information includes at least one of following information: reducing the operating bandwidth of the STA; performing transmission and reception only on a primary channel, or performing reception only on a primary channel; performing transmission and reception only on at least one secondary channel, or performing reception only on at least one secondary channel; whether to switch the operating channel; a target operating channel after switching; a switching start time; a switching completion time; or a switching delay.

Reducing the operating bandwidth of the STA means reducing the number of subchannels in the operating channel of the STA, for example, reducing from two subchannels to one subchannel. Performing transmission and reception only on the primary channel refers to no longer using the secondary channel for transmission and reception. Performing reception only on the primary channel refers to no longer using the secondary channel for reception in the downlink reception process. Performing transmission and reception only on at least one secondary channel refers to no longer using the remaining subchannels including the primary channel for transmission and reception. Performing reception only on at least one secondary channel refers to no longer using the remaining subchannels including the primary channel for reception in the downlink reception process. Whether to switch the operating channel indicates switching the operating channel or not switching the operating channel. The target operating channel after the switching refers to the subchannels that constitute the operating channel after the switching in the case of switching the operating channel. The switching start time is the time at which the STA expects to start switching the operating channel. The switching completion time is the time at which the STA expects to finish the operating channel. The switching delay is a difference value between the switching completion time and the switching start time expected by the STA.

In some embodiments, the second information includes at least one of following information: restoring or increasing the operating bandwidth of the STA, restoring to an operating bandwidth before the interference, whether to switch the operating channel, a target operating channel after switching, a switching start time, a switching completion time, or a switching delay.

In a case where the switching delay is not greater than a first duration, the second information does not need to indicate at least one of the switching delay, the switching completion time, or the switching delay. For example, the second information indicates only the switching start time; or the second information does not need to indicate the switching delay; or the second information does not need to indicate the switching completion time and the switching delay.

In the case where the switching delay is greater than the first duration, the second information carries at least two of the switching delay, the switching completion time, and the switching delay. For example, the second information carries the switching completion time and the switching delay; or the second time carries the switching start time and the switching delay; or the second time carries the switching start time and the switching completion time; or the second time carries the switching start time, the switching completion time, and the switching delay. Exemplarily, the first duration is an SIFS.

It should be noted that in some embodiments, the switching delay is related to a capability of the STA, and the STA may notify the AP of the switching delay in advance, for example, the STA notifies the AP of the switching delay of this STA in an association process. In this way, in the case of reporting the second information, it is no longer necessary to report the switching delay, and only the switching start time or the switching end time needs to be reported.

In some embodiments, the second information is carried in at least one of following information: an RTS frame, a BA frame, an ACK frame, A-Control of a data frame, A-Control of a management frame, an A-Control field of an additional QoS Null frame, or an additional management frame.

In some embodiments, the second information is carried in any one of the above information. In some embodiments, the second information is split into at least two pieces of sub-information. Each piece of sub-information is carried in any one of the above information, and the second information is carried in a plurality of pieces of information of the same type or different types.

In some embodiments, the second information is carried in at least one of following frames: a Block Acknowledgment Control field of the BA frame, or control information of an A-Control field of the data frame or the management frame, or an Action field of the management frame.

In summary, in the method according to the embodiments, the first information and/or the second information of the STA is sent in the uplink transmission, wherein the first information is used to indicate the interference to the STA, and the second information is used to indicate the adjustment of at least one operating channel by the STA, such that the STA is capable of actively reporting the interference information, or actively adjusting the operating channel in the case of interference, and actively reporting the adjustment information of the operating channel to the AP. Since the method performs reporting or adjustment at the STA granularity, the method is applicable to scenarios involving inconsistent OBSS interference or non-OBSS interference.

In an OBSS interference scenario, in the case where the STA experiences the OBSS interference and the AP does not receive the OBSS interference, the STA actively reports the first information and/or the second information, such that the AP can be triggered to perform or coordinate subsequent operating channel adjustments.

In a non-OBSS interference scenario, in the case where the STA experiences the intra-device interference, the STA actively reports the first information and/or the second information, such that the AP can be triggered to perform or coordinate subsequent operating channel adjustments.

FIG. 5 illustrates a schematic flowchart of a method for transmitting information according to some other exemplary embodiments of the present disclosure. Taking the example where the method is performed by an STA, the method includes at least part of following present.

**In process 120,** first information and/or second information are sent in uplink transmission.

The operating channel of the STA includes at least one subchannel, wherein the at least one subchannel includes one primary channel and at least zero secondary channel. The primary channel and the secondary channel have the same or different bandwidths. In a case where at least two secondary channels are present, the bandwidths of the secondary channels are the same or different.

The first information is used to indicate interference to the STA. The second information is used to indicate the adjustment of the operating channel by the STA in the case of interference.

In some embodiments, the interference refers to OBSS interference or intra-device interference. In some embodiments, the OBSS interference is consistent OBSS interference for both the STA and the AP, or inconsistent OBSS interference for the STA and the AP. In the embodiments of the present disclosure, an example in which the OBSS interference is inconsistent OBSS interference for the STA and the AP is used for description.

For the first information and the second information, reference can be made to the descriptions in the embodiments of FIG. 4, which will not be elaborated herein any further.

In some embodiments, the first information and the second information are sent simultaneously, that is, sent in the same uplink transmission. In some embodiments, the first information and the second information are sent separately, that is, the first information and the second information are sent in different uplink transmissions. For example, the first information is sent first, and then the second information is sent.

**In process 140,** the STA adjusts to operate on an interference-free subchannel.

In some embodiments, the STA adjusts to operate on an interference-free subchannel before the interference starts, or upon the onset of the interference, or upon detection of the interference.

In some embodiments, the operating channel before the adjustment is defined as a current operating channel, and the operating channel after the adjustment is defined as a target operating channel. The target operating channel includes any one of following cases:
**Case 1:** all interference-free subchannels in the current operating channel.
   The interference-free subchannels are subchannels other than the interfered subchannel in the current operating channel.
**Case 2:** a part of interference-free subchannels in the current operating channel.
   In some embodiments, the interference-free subchannels are at least two groups of non-contiguous subchannels, and the target operating channel refers to a group with the largest number of contiguous subchannels in the at least two groups of subchannels. In some embodiments, the interference-free subchannels are at least two groups of non-contiguous subchannels, and the target operating channel refers to one non-contiguous subchannel. In some embodiments, the interference-free subchannel includes a primary channel and at least one secondary channel, and the target operating channel is the primary channel. In some embodiments, the interference-free subchannel includes a primary channel and at least one secondary channel, and the target operating channel is the primary channel and the secondary channel contiguous to the primary channel.
**Case 3:** another interference-free subchannel not belonging to the current operating channel.
   For example, in a case where the entire current operating channel experiences interference, the target operating channel may be one or more subchannels that are completely different from the current operating channel.
**Case 4:** a first interference-free subchannel belonging to the current operating channel and a second interference-free subchannel not belonging to the current operating channel.

For example, in a case where a plurality of subchannels in the current operating channel experience interference, and the STA needs to operate on at least two contiguous subchannels, the target operating channel includes the first interference-free subchannel belonging to the current operating channel and the second interference-free subchannel not belonging to the current operating channel.

In the embodiments of the present disclosure, a plurality of ways to select a part of interference-free subchannels are present, which will not be listed exhaustively.

In some embodiments, the current operating channel includes an uplink operating channel and a downlink operating channel. The adjustment range of the above adjustment includes any one of following three ranges:
**Range 1:** The uplink operating channel and the downlink operating channel are adjusted simultaneously.
   In some embodiments, the uplink operating channel and the downlink operating channel are adjusted identically, but the possibility that the uplink operating channel and the downlink operating channel are adjusted differently in some embodiments is not excluded.
**Range 2:** The uplink operating channel is kept unchanged, and the downlink operating channel is adjusted.
   In some embodiments, the STA experiences the intra-device interference. In this case, the uplink transmission of the STA is not affected, and only the downlink transmission is affected. Therefore, the uplink operating channel is kept unchanged, and only the downlink operating channel is adjusted.
**Range 3:** The downlink operating channel is kept unchanged, and the uplink operating channel is adjusted.

In some embodiments, in a case where the transmission of the downlink operating channel of the STA is not affected, for example, periodic downlink transmission is performed outside the interference time, the STA can keep the downlink operating channel unchanged and adjust only the uplink operating channel.

In the embodiments of the present disclosure, an example in which the uplink operating channel and the downlink operating channel are adjusted simultaneously, or only the downlink operating channel is adjusted while the uplink operating channel is kept unchanged is used for description.

In some embodiments, adjusting to operate on the interference-free subchannel includes at least one of following adjustment methods.

**Adjustment method 1:** In a case where the secondary channel experiences interference and the primary channel is interference-free, the channel bandwidth of the STA is reduced to perform transmission and reception on the primary channel.

**Adjustment method 2:** In a case where the secondary channel experiences interference and at least two contiguous subchannels including the primary channel are interference-free, the channel bandwidth of the STA is reduced to perform transmission and reception on the at least two contiguous subchannels.

**Adjustment method 3:** In a case where at least one subchannel including the primary channel experiences interference and at least one secondary channel is interference-free, the channel bandwidth of the STA is reduced to perform transmission and reception on the interference-free secondary channel.

**Adjustment method 4:** In a case where a switching condition is met, a target operating channel different from the current operating channel is switched to for transmission and reception.

**Adjustment method 5:** In a case where the interference type is intra-device interference, the uplink channel bandwidth of the STA is kept unchanged, and the downlink channel bandwidth of the STA is reduced to perform reception on an interference-free subchannel.

**Adjustment method 6:** In a case where the interference type is intra-device interference and a switching condition is met, the uplink channel bandwidth of the STA is kept unchanged, and a target operating channel different from the current downlink channel is switched to for reception.

In some embodiments, in the above adjustment method 4 and/or adjustment method 6, the switching condition includes at least one of following conditions: at least one subchannel including a primary channel experiences interference, an interference-free subchannel is a non-contiguous subchannel, or an entire operating channel bandwidth of the current operating channel experiences interference.

In some embodiments, as long as at least one subchannel including the primary channel experiences interference, it is considered that the switching condition is met. In some embodiments, the STA needs to operate on contiguous subchannels, and in a case where the interference-free subchannel is a non-contiguous subchannel, it is considered that the switching condition is met. In some embodiments, the STA needs to operate on n contiguous subchannels, and in a case where the number of contiguous subchannels in the interference-free subchannel is less than n, it is considered that the switching condition is met. In some embodiments, in the case where the entire operating channel bandwidth of the current operating channel experiences interference, it is considered that the switching condition is met.

In some embodiments, the STA first sends the second information, and then adjusts to an interference-free subchannel for reception and/or transmission. In some embodiments, the STA first adjusts to an interference-free subchannel for reception and/or transmission, and then sends the second information. In some embodiments, the STA simultaneously sends the second information and adjusts to an interference-free subchannel for reception and/or transmission.

In some embodiments, in a case where the interference ends, the operating channel is adjusted to a state as the start of a first transmission opportunity (TXOP); alternatively, in a case where the first TXOP ends, the operating channel is adjusted to a state as the start of the first TXOP, wherein the first TXOP is a TXOP used by the STA. Prior to adjusting the operating channel to the state as the start of the first TXOP, the STA may resend the second information to explicitly indicate the restoration of the adjustment this time. Alternatively, the STA may not resend the second information and restore the adjustment implicitly based on the agreed method.

In summary, in the method according to the embodiments, the STA sends the first information and/or the second information, and adjusts to an interference-free subchannel for reception and/or transmission, such that in a case where interference occurs at the STA but not on the AP or interference on the AP is different from interference at the STA, the STA can actively adjust its own operating channel, and avoid an interfered subchannel as much as possible in the wireless transmission process by reducing its own operating bandwidth and/or switching to the originally unused subchannel.

FIG. 6 illustrates a schematic flowchart of a method for transmitting information according to some other exemplary embodiments of the present disclosure. Taking the example where the method is performed by an STA, the method includes at least part of following processes.

Compared with the embodiments of FIG. 5, process 130 is added in the embodiments. Subsequent to receiving the first information and/or the second information, the AP indicates the adjustment of the operating channel to the STA or negotiates the adjustment with the STA.

**In process 130,** third information is received in downlink transmission, wherein the third information is used to indicate the adjustment of the operating channel of the STA by the AP.

Subsequent to receiving the first information and/or the second information, the AP sends the third information to the STA in downlink transmission. The third information is used to indicate the adjustment of the operating channel of the STA by the AP. The STA receives the third information from the AP in downlink transmission.

In some embodiments, in a case where the AP receives the second information reported by the STA and does not agree with the adjustment of the operating channel by the STA, the AP sends the third information to the STA, wherein the adjustment method of the third information is different from that of the second information. In a case where the AP receives the second information reported by the STA and agrees with the adjustment of the operating channel by the STA, the AP does not need to send the third information.

In some embodiments, in a case where the AP receives the second information reported by the STA and does not agree with the adjustment of the operating channel by the STA, the AP sends the third information to the STA, wherein the adjustment method of the third information is different from that of the second information. In a case where the AP receives the second information reported by the STA and agrees with the adjustment of the operating channel by the STA, the AP sends the third information to the STA, wherein the adjustment method of the third information is the same as that of the second information.

In some embodiments, the AP instructs the STA to adjust to operate on an interference-free subchannel in a case where a sending condition is met. The sending condition includes at least one of: before the interference starts, upon the onset of the interference, upon receiving the first information, upon receiving the second information, or upon the end of the interference.

In some embodiments, similar to the previous embodiment, the operating channel before the adjustment is defined as a current operating channel, and the operating channel after the adjustment is defined as a target operating channel. The target operating channel includes any one of following cases:
**Case 1:** all interference-free subchannels in the current operating channel.
**Case 2:** a part of interference-free subchannels in the current operating channel.
**Case 3:** another interference-free subchannel not belonging to the current operating channel.
**Case 4:** a first interference-free subchannel belonging to the current operating channel and a second interference-free subchannel not belonging to the current operating channel.

In the embodiments of the present disclosure, a plurality of ways to select a part of interference-free subchannels may be presen, which will not be listed exhaustively.

In some embodiments, the current operating channel includes an uplink operating channel and a downlink operating channel. The adjustment range of the above adjustment includes any one of following three ranges.

**Range 1:** The uplink operating channel and the downlink operating channel are adjusted simultaneously.

In some embodiments, the uplink operating channel and the downlink operating channel are adjusted identically, but the possibility that the uplink operating channel and the downlink operating channel are adjusted differently in some embodiments is not excluded.

**Range 2:** The uplink operating channel is kept unchanged, and the downlink operating channel is adjusted.

In some embodiments, the STA experiences the intra-device interference. In this case, the uplink transmission of the STA is not affected, and only the downlink transmission is affected. Therefore, the uplink operating channel is kept unchanged, and only the downlink operating channel is adjusted.

**Range 3:** The downlink operating channel is kept unchanged, and the uplink operating channel is adjusted.

In some embodiments, in a case where the transmission of the downlink operating channel of the STA is not affected, for example, periodic downlink transmission is performed outside the interference time, the STA can keep the downlink operating channel unchanged and adjust only the uplink operating channel.

In some embodiments, the adjustment method indicated by the third information is determined based on the first information. The adjustment method indicated by the third information includes at least one of following adjustment methods.

**Adjustment method 1:** In a case where the secondary channel experiences interference and the primary channel is interference-free, the third information instructs the STA to reduce the channel bandwidth of the operating channel to perform the transmission and reception on the primary channel.

**Adjustment method 2:** In a case where the secondary channel experiences interference and at least two contiguous subchannels including the primary channel are interference-free, the third information instructs the STA to reduce the channel bandwidth of the operating channel to perform transmission and reception on the at least two contiguous subchannels.

**Adjustment method 3:** In a case where at least one subchannel including the primary channel experiences interference and at least one secondary channel is interference-free, the third information instructs the STA to reduce the channel bandwidth of the operating channel to perform transmission and reception on the interference-free secondary channel.

**Adjustment method 4:** In a case where a switching condition is met, the third information instructs the STA to switch to a target operating channel different from the current operating channel for transmission and reception.

**Adjustment method 5:** In a case where the interference type is intra-device interference, the third information instructs the STA to keep the uplink channel bandwidth unchanged and reduce the downlink channel bandwidth to perform reception on an interference-free subchannel.

**Adjustment method 6:** In a case where the interference type is intra-device interference and a switching condition is met, the third information instructs the STA to keep the uplink channel bandwidth unchanged and switch to a target operating channel different from the current downlink channel for reception.

In some embodiments, in the above adjustment method 4 and/or adjustment method 6, the switching condition includes at least one of following conditions: ·at least one subchannel including a primary channel experiences interference, an interference-free subchannel is a non-contiguous subchannel, or an entire operating channel bandwidth of the current operating channel experiences interference.

In some embodiments, as long as at least one subchannel including the primary channel experiences interference, it is considered that the switching condition is met. In some embodiments, the STA needs to operate on contiguous subchannels, and in the case where the interference-free subchannel is a non-contiguous subchannel, it is considered that the switching condition is met. In some embodiments, the STA needs to operate on n contiguous subchannels, and in the case where the number of contiguous subchannels in the interference-free subchannel is less than n, it is considered that the switching condition is met. In some embodiments, in the case where the entire operating channel bandwidth of the current operating channel experiences interference, it is considered that the switching condition is met.

In some embodiments, the STA first sends the second information, and, subsequent to receiving the third information, adjusts to an interference-free subchannel for reception and/or transmission based on the indication of the third information. In some embodiments, the STA first adjusts, based on the first information and/or the second information, to an interference-free subchannel for reception and/or transmission, and in a case of receiving the third information, then readjusts, based on the indication of the third information, to an interference-free subchannel for reception and/or transmission.

In some embodiments, the third information is used to indicate at least one of following information: whether the STA is required to switch the operating channel, indicating a target operating channel for the STA to switch to, a switching start time, or a switching completion time.

In some embodiments, the third information is carried in at least one of following frames: an RTS frame, a BA frame, an ACK frame, A-Control of a data frame, A-Control of a management frame, an A-Control field of an additional QoS Null frame, an additional management frame, a multiuser request-to-send (MU-RTS), a basic trigger frame, or clear-to-send (CTS).

In some embodiments, the User Information field of the MU-RTS includes at least one of: an Associated Identifier field, used to indicate the STA; a Switching field, used to indicate whether the STA indicated by the Associated Identifier field adjusts the operating channel; or a Start-of-Switching Time field, used to indicate the time at which the STA indicated by the Associated Identifier field starts to adjust the operating channel.

In some embodiments, the user information list of the basic trigger frame includes a User Information field and a User Information Extension field that appear in pairs.

The User Information field is used to indicate the STA and allocate a resource unit to the STA; and the User Information Extension field includes a Switching field and/or a Start-of-Switching field.

The Switching field is used to indicate whether the STA adjusts the operating channel, wherein in a case where the STA adjusts the operating channel, a target operating channel is a subchannel on which the resource unit allocated to the STA is located. The Start-of-Switching Time field is used to indicate the time at which the STA starts to adjust the operating channel.

In summary, in the method according to the embodiments, subsequent to sending the first information and/or the second information, the STA receives the third information from the AP, and adjusts to an interference-free subchannel for reception and/or transmission based on the third information, such that in a case where interference occurs at the STA but not on the AP or interference on the AP is different from interference at the STA, the STA can actively report interference information or suggest the adjustment of the operating channel, and the AP indicates, over the third information, the adjustment of the operating channel determined by the AP, thereby facilitating the AP to perform overall management or adjustment on a plurality of STAs, and avoiding an interfered subchannel as much as possible in the wireless transmission process.

FIG. 7 illustrates a schematic flowchart of a method for receiving information according to some exemplary embodiments of the present disclosure. Taking the example where the method is performed by an AP, the method includes at least part of following processes.

**In process 220,** first information and/or second information are received in uplink transmission.

The operating channel of the STA includes at least one subchannel, wherein the at least one subchannel includes one primary channel and at least zero secondary channel. The primary channel and the secondary channel have the same or different bandwidths. In a case where at least two secondary channels are present, the bandwidths of the secondary channels are the same or different.

The first information is used to indicate interference to the STA, and the first information may also be referred to as interference information. The second information is used to indicate the adjustment of the operating channel by the STA in the case of interference, and the second information may also be referred to as operating channel information, operating channel adjustment information, or operating channel switching information.

In some embodiments, the interference refers to OBSS interference or intra-device interference. In some embodiments, the OBSS interference is either consistent OBSS interference for both the STA and the AP, or inconsistent OBSS interference for the STA and the AP. In the embodiments of the present disclosure, an example in which the OBSS interference is inconsistent OBSS interference for the STA and the AP is used for description.

**With respect to the first information:**
The first information is used to indicate interference to the STA. The interference is the interference that the STA is currently experiencing, or the interference that the STA expects to experience.

In some embodiments, the first information includes at least one of following information: an interference source, periodic interference or aperiodic interference, an expected duration of the interference, an expected start time of the interference, an expected end time of the interference, or an interfered subchannel.

The interference source includes at least one of: OBSS interference, intra-device interference, or interference of an unknown type. The periodic interference refers to interference that periodically occurs in a period of time, and the aperiodic interference refers to interference that does not follow a periodic pattern. The expected duration of the interference is the duration that the STA expects the interference to last, and an deviation may be present between the expected duration and the actual duration of the interference. The expected start time of the interference is the time at which the STA expects the interference to start, and an deviation may be present between the expected start time and the actual start time of the interference. The expected end time of the interference is the time at which the STA expects the interference to end. The interfered subchannel is a subchannel being interfered with.

In some embodiments, the first information is carried in at least one of following information: an RTS frame, a BA frame, an ACK frame, A-Control of a data frame, A-Control of a management frame, an A-Control field of an additional QoS Null frame, or an additional management frame.

In some embodiments, the first information is carried in any one of the above information. In some embodiments, the first information is split into at least two pieces of sub-information. Each piece of sub-information is carried in any one of the above information, and the first information is carried in a plurality of pieces of information of the same type or different types.

In some embodiments, the first information is carried in: a Block Acknowledgment Control field of the BA frame, or control information of an A-Control field of the data frame or the management frame, or an Action field of the management frame.

**With respect to the second information:**
The second information is used to indicate the adjustment of the operating channel by the STA in the case of interference. The adjustment is used to adjust the operating channel of the STA to an interference-free subchannel for operation. In some embodiments, the second information is used to indicate an adjustment that the STA has performed, will perform, or is expected to perform.

In some embodiments, the second information is used to indicate the adjustment of the operating channel by the STA in the case of OBSS interference, for example, the adjustment of the operating channel by the STA in the case of inconsistent OBSS interference. In some embodiments, the second information is used to indicate the adjustment of the operating channel by the STA in the case of intra-device interference.

In some embodiments, the second information is used to indicate the adjustment of the operating channel before the interference occurs or during the interference. In some embodiments, the second information is used to indicate the adjustment (or restoration) of the operating channel after the interference ends.

In some embodiments, the second information is used to indicate the adjustment of the operating channel before the interference occurs or during the interference. The second information includes at least one of following information: reducing the operating bandwidth of the STA; performing transmission and reception only on a primary channel, or performing reception only on a primary channel; performing transmission and reception only on at least one secondary channel, or performing reception only on at least one secondary channel; whether to switch the operating channel; a target operating channel after switching; a switching start time; a switching completion time; or a switching delay.

Reducing the operating bandwidth of the STA means reducing the number of subchannels in the operating channel of the STA, for example, reducing from two subchannels to one subchannel. Performing transmission and reception only on the primary channel refers to no longer using the secondary channel for transmission and reception. Performing reception only on the primary channel refers to no longer using the secondary channel for reception in the downlink reception process. Performing transmission and reception only on at least one secondary channel refers to no longer using the remaining subchannels including the primary channel for transmission and reception. Performing reception only on at least one secondary channel refers to no longer using the remaining subchannels including the primary channel for reception in the downlink reception process. Whether to switch the operating channel indicates switching the operating channel or not switching the operating channel. The target operating channel after the switching refers to the subchannels that constitute the operating channel after the switching in the case of switching the operating channel. The switching start time is the time at which the STA expects to start switching the operating channel. The switching completion time is the time at which the STA expects to finish switching the operating channel. The switching delay is a difference value between the switching completion time and the switching start time expected by the STA.

In some embodiments, the second information is used for the second information including at least one of following information: restoring or increasing the operating bandwidth of the STA, restoring to an operating bandwidth before the interference, whether to switch the operating channel, a target operating channel after switching, a switching start time, a switching completion time, or a switching delay.

In a case where the switching delay is not greater than a first duration, the second information does not need to indicate at least one of the switching delay, the switching completion time, or the switching delay. For example, the second information indicates only the switching start time; or the second information does not need to indicate the switching delay; or the second information does not need to indicate the switching completion time and the switching delay.

In a case where the switching delay is greater than the first duration, the second information carries at least two of the switching delay, the switching completion time, and the switching delay. For example, the second information carries the switching completion time and the switching delay; or the second time carries the switching start time and the switching delay; or the second time carries the switching start time and the switching completion time; or the second time carries the switching start time, the switching completion time, and the switching delay. Exemplarily, the first duration is an SIFS.

It should be noted that in some embodiments, the switching delay is related to the capability of the STA, and the STA notifies the AP of the switching delay in advance, for example, the STA notifies the AP of the switching delay of this STA in an association process. In this way, in the case of reporting the second information, it is no longer necessary to report the switching delay, and only the switching start time or the switching end time needs to be reported.

In some embodiments, the second information is carried in at least one of following information: an RTS frame, a BA frame, an ACK frame, A-Control of a data frame, A-Control of a management frame, an A-Control field of an additional QoS Null frame, or an additional management frame.

In some embodiments, the second information is carried in any one of the above information. In some embodiments, the second information is split into at least two pieces of sub-information. Each piece of sub-information is carried in any one of the above information, and the second information is carried in a plurality of pieces of information of the same type or different types.

In some embodiments, the second information is carried in at least one of following frames: a Block Acknowledgment Control field of the BA frame, or control information of an A-Control field of the data frame or the management frame, or an Action field of the management frame.

In summary, in the method according to the embodiments, the first information and/or the second information of the STA is received in the uplink transmission, wherein the first information is used to indicate the interference to the STA, and the second information is used to indicate the adjustment of at least one operating channel by the STA, such that the STA is capable of actively reporting the interference information, or actively adjusting the operating channel in the case of interference, and actively reporting the adjustment information of the operating channel to the AP. Since the method performs reporting or adjustment at the STA granularity, the method is applicable to scenarios involving inconsistent OBSS interference or non-OBSS interference.

In an OBSS interference scenario, in a case where the STA experiences the OBSS interference and the AP does not receive the OBSS interference, the STA actively reports the first information and/or the second information, such that the AP can be triggered to perform or coordinate subsequent operating channel adjustments.

In a non-OBSS interference scenario, in a case where the STA experiences the intra-device interference, the STA actively reports the first information and/or the second information, such that the AP can be triggered to perform or coordinate subsequent operating channel adjustments.

FIG. 8 illustrates a schematic flowchart of a method for receiving information according to some other exemplary embodiments of the present disclosure. Taking the example where the method is performed by an AP, the method includes at least part of following processes.

**In process 220,** first information and/or second information of an STA is received in uplink transmission.

The operating channel of the STA includes at least one subchannel, wherein the at least one subchannel includes one primary channel and at least zero secondary channel. The primary channel and the secondary channel have the same or different bandwidths. In a case where at least two secondary channels are present, the bandwidths of the secondary channels are the same or different.

The first information is used to indicate interference to the STA. The second information is used to indicate the adjustment of the operating channel by the STA in the case of interference.

In some embodiments, the interference refers to OBSS interference or intra-device interference. In some embodiments, the OBSS interference is consistent OBSS interference for both the STA and the AP, or inconsistent OBSS interference for the STA and the AP. In the embodiments of the present disclosure, an example in which the OBSS interference is inconsistent OBSS interference for the STA and the AP is used for description.

For the first information and the second information, reference can be made to the descriptions in the embodiments of FIG. 7, which will not be elaborated herein any further.

In some embodiments, the first information and the second information are sent simultaneously, that is, sent in the same uplink transmission. In some embodiments, the first information and the second information are sent separately, that is, the first information and the second information are sent in different uplink transmissions. For example, the first information is sent first, and then the second information is sent.

**In step 240,** the transmission of the STA is scheduled on an interference-free subchannel.

In some embodiments, after the first information is received, the uplink transmission and/or the downlink transmission related to the STA is adjusted to a subchannel on which the STA is interference-free, wherein the adjustment method is specified in a protocol or predefined, the adjustment methods for the AP and the STA are the same, and the STA does not need to additionally send the second information. In some embodiments, after the second information is received, the uplink transmission and/or the downlink transmission related to the STA is adjusted to a subchannel on which the STA is interference-free, wherein the adjustment method is indicated or suggested by the second information, and the STA does not need to send the first information. In some embodiments, after the first information and the second information are received, the uplink transmission and/or the downlink transmission related to the STA is adjusted to a subchannel on which the STA is interference-free, wherein the adjustment method is indicated or suggested by the second information.

In some embodiments, the uplink transmission and/or the downlink transmission for the STA is adjusted to a subchannel on which the STA is interference-free before the interference to the STA starts, or upon the onset of the interference, or upon detection of the interference.

In some embodiments, the operating channel before the adjustment is defined as a current operating channel, and the operating channel after the adjustment is defined as a target operating channel. The target operating channel includes any one of following cases:
**Case 1:** all interference-free subchannels in the current operating channel.
   The interference-free subchannels are subchannels other than the interfered subchannel in the current operating channel.
**Case 2:** a part of interference-free subchannels in the current operating channel.
   In some embodiments, the interference-free subchannels are at least two groups of non-contiguous subchannels, and the target operating channel refers to a group with the largest number of contiguous subchannels in the at least two groups of subchannels. In some embodiments, the interference-free subchannels are at least two groups of non-contiguous subchannels, and the target operating channel refers to one non-contiguous subchannel. In some embodiments, the interference-free subchannel includes a primary channel and at least one secondary channel, and the target operating channel is the primary channel. In some embodiments, the interference-free subchannel includes a primary channel and at least one secondary channel, and the target operating channel is the primary channel and the secondary channel contiguous to the primary channel.
**Case 3:** another interference-free subchannel not belonging to the current operating channel.
   For example, in a case where the entire current operating channel experiences interference, the target operating channel may be one or more subchannels that are completely different from the current operating channel.
**Case 4:** a first interference-free subchannel belonging to the current operating channel and a second interference-free subchannel not belonging to the current operating channel.

For example, in a case where a plurality of subchannels in the current operating channel experience interference, and the STA needs to operate on at least two contiguous subchannels, the target operating channel includes the first interference-free subchannel belonging to the current operating channel and the second interference-free subchannel not belonging to the current operating channel.

In the embodiments of the present disclosure, a plurality of ways to select a part of interference-free subchannels may be present, which will not be listed exhaustively.

In some embodiments, the current operating channel includes an uplink operating channel and a downlink operating channel. The adjustment range of the above adjustment includes any one of following three ranges.

**Range 1:** The uplink operating channel and the downlink operating channel are adjusted simultaneously.

In some embodiments, the uplink operating channel and the downlink operating channel are adjusted identically, but the possibility that the uplink operating channel and the downlink operating channel are adjusted differently in some embodiments is not excluded.

**Range 2:** The uplink operating channel is kept unchanged, and the downlink operating channel is adjusted.

In some embodiments, the STA experiences the intra-device interference. In this case, the uplink transmission of the STA is not affected, and only the downlink transmission is affected. Therefore, the uplink operating channel is kept unchanged, and only the downlink operating channel is adjusted.

**Range 3:** The downlink operating channel is kept unchanged, and the uplink operating channel is adjusted.

In some embodiments, in a case where the transmission of the downlink operating channel of the STA is not affected, for example, periodic downlink transmission is performed outside the interference time, the STA can keep the downlink operating channel unchanged and adjust only the uplink operating channel.

In the embodiments of the present disclosure, an example in which the uplink operating channel and the downlink operating channel are adjusted simultaneously, or only the downlink operating channel is adjusted while the uplink operating channel is kept unchanged is used for description.

In some embodiments, adjusting to operate on the subchannel on which the STA is interference-free based on the first information and/or the second information includes at least one of following adjustment methods.

**Adjustment method 1:** In a case where the secondary channel experiences interference and the primary channel is interference-free, the wireless transmission with the STA is scheduled to the primary channel for transmission and reception.

**Adjustment method 2:** In a case where the secondary channel experiences interference and at least two contiguous subchannels including the primary channel are interference-free, the wireless transmission with the STA is scheduled to the at least two contiguous subchannels for transmission and reception.

**Adjustment method 3:** In a case where at least one subchannel including the primary channel experiences interference and at least one secondary channel is interference-free, the wireless transmission with the STA is scheduled to the interference-free secondary channel for transmission and reception.

**Adjustment method 4:** In a case where a switching condition is met, the wireless transmission with the STA is scheduled to a target operating channel different from the current operating channel for transmission and reception.

**Adjustment method 5:** In a case where the interference type is intra-device interference, the uplink channel bandwidth of the STA is kept unchanged, and the downlink transmission with the STA is scheduled to an interference-free subchannel for reception.

**Adjustment method 6:** In a case where the interference type is intra-device interference and a switching condition is met, the uplink channel bandwidth of the STA is kept unchanged, and the downlink transmission with the STA is scheduled to a target operating channel different from the current downlink channel for reception.

In some embodiments, in the above adjustment method 4 and/or adjustment method 6, the switching condition includes at least one of following conditions: at least one subchannel including a primary channel experiences interference, an interference-free subchannel is a non-contiguous subchannel, or an entire operating channel bandwidth of the current operating channel experiences interference.

In some embodiments, as long as at least one subchannel including the primary channel experiences interference, it is considered that the switching condition is met. In some embodiments, the STA needs to operate on contiguous subchannels, and in a case where the interference-free subchannel is a non-contiguous subchannel, it is considered that the switching condition is met. In some embodiments, the STA needs to operate on n contiguous subchannels, and in a case where the number of contiguous subchannels in the interference-free subchannel is less than n, it is considered that the switching condition is met. In some embodiments, in the case where the entire operating channel bandwidth of the current operating channel experiences interference, it is considered that the switching condition is met.

In some embodiments, the second information is sent by the STA prior to being adjusted to the interference-free subchannel for reception and/or transmission. In some embodiments, the second information is sent by the STA subsequent to being adjusted to the interference-free subchannel for reception and/or transmission. In some embodiments, the second information is sent by the STA while being adjusted to the interference-free subchannel.

Since the same AP may provide services for a plurality of STAs, in some embodiments, the method further includes: maintaining, by the AP, in a case where a part of STAs in a first transmission period experience interference on a primary channel, transmission on the primary channel.

The first transmission period is a part of a first TXOP. The first TXOP is a TXOP corresponding to an STA that sends the first information and/or the second information.

That is, in the case where only a part or a small part of STAs experience interference on the primary channel, since a part of STAs are interference-free on the primary channel, the AP maintains transmission on the primary channel, thereby ensuring the transmission of the interference-free STAs on the primary channel.

In some embodiments, in a case where all STAs in the first transmission period experience interference on the primary channel, a physical layer protocol data unit (PPDU) used to occupy a channel is sent on the primary channel. The PPDU is used to ensure that a first TXOP is not preempted by another STA or AP.

The first transmission period is a part of a first TXOP, wherein the first TXOP is a TXOP corresponding to an STA that sends the first information and/or the second information.

In some embodiments, the method further includes: scheduling, by the AP, in a case where all STAs in a first transmission period experience interference on a primary channel, the transmission of another STA on the primary channel.

The first transmission period is a part of a first TXOP, wherein the first TXOP is a TXOP corresponding to an STA that sends the first information and/or the second information.

In some embodiments, the method further includes: suspending, by the AP, downlink transmission with the STA, wherein the number of suspensions is related to a switching delay or a switching completion time.

In some embodiments, the method further includes: sending a downlink trigger frame on an interference-free subchannel using a Non-HT duplicate PPDU.

In some embodiments, the method further includes: sending, in a case where one STA is present in a first TXOP, subsequent to waiting for an idle duration of a target operating channel indicated by the second information to reach a second duration, a PPDU used to occupy a channel on the target operating channel.

The first TXOP is a TXOP corresponding to an STA that sends the second information. Exemplarily, the second duration is a PIFS. In some embodiments, since the STA cannot preempt the target operating channel before the switching is completed, the AP sends, on the target operating channel, the PPDU used to occupy a channel, to help the STA preempt the target operating channel, which ensures that the STA successfully uses the target operating channel after the switching is completed.

In some embodiments, the PPDU used to occupy the channel includes: a preamble, or a payload, or a preamble and a payload, or a DATA field carrying a CTS frame, or a DATA field carrying a QoS Null frame.

In some embodiments, a value in a Duration field of the PPDU is determined based on the switching completion time.

In some embodiments, the method further includes: switching, by the AP, a primary channel. Switching, by the AP, the primary channel includes at least one of: switching the primary channel in all current subchannels; or switching the primary channel in all current subchannels and reducing the operating channel bandwidth of the AP.

In some embodiments, a holder of the first TXOP used by the STA is an AP.

In some embodiments, a holder of the first TXOP used by the STA is an STA, and the method further includes: sending a BA/ACK frame on a target operating channel indicated by the STA, wherein the BA/ACK frame is transmitted by using a MU PPDU or a Non-HT duplicate PPDU.

In some embodiments, in a case where the interference ends, the AP instructs, over the third information, the STA to adjust the operating channel to a state as the start of a first TXOP; alternatively, in a case where the first TXOP ends, the AP instructs, over the third information, the STA to adjust the operating channel to a state as the start of the first TXOP, wherein the first TXOP is a TXOP used by the STA.

In summary, in the method according to the embodiments, the first information and/or the second information of the STA is received, and the adjustment is made to an interference-free subchannel for reception and/or transmission, such that in a case where interference occurs at the STA but not on the AP or interference on the AP is different from interference at the STA, the STA is capable of actively adjusting its own operating channel, and avoiding an interfered subchannel as much as possible in the wireless transmission process by reducing its own operating bandwidth and/or switching to the originally unused subchannel.

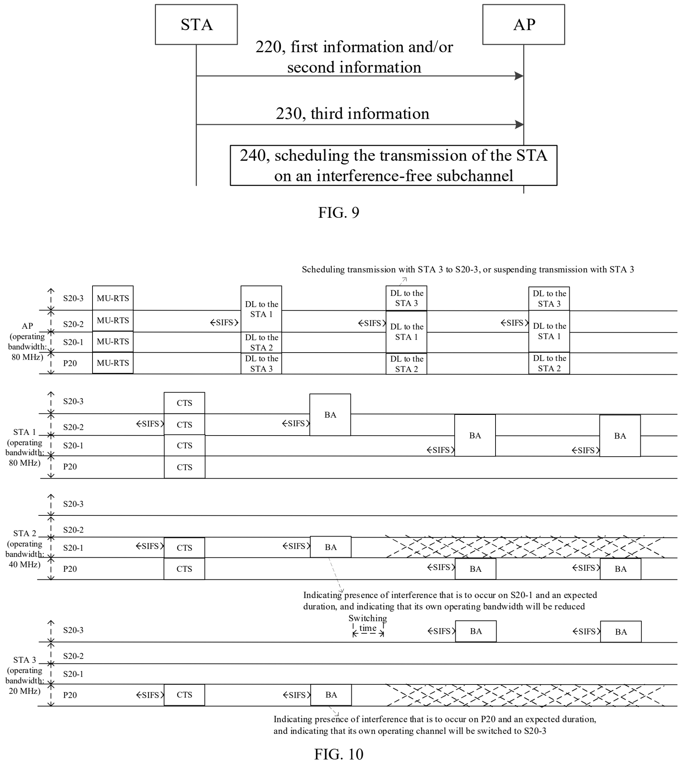

FIG. 9 illustrates a schematic flowchart of a method for receiving information according to some other exemplary embodiments of the present disclosure. Taking the example where the method is performed by an STA, the method includes at least part of following processes.

Compared with the embodiments of FIG. 8, process 230 is added in the embodiments. Subsequent to receiving the first information and/or the second information, the AP indicates the adjustment of the operating channel to the STA or negotiates the adjustment with the STA.

**In process 230,** third information is sent in downlink transmission, wherein the third information is used to indicate the adjustment of the operating channel of the STA by the AP.

Subsequent to receiving the first information and/or the second information, the AP sends the third information to the STA in downlink transmission. The third information is used to indicate the adjustment of the operating channel of the STA by the AP. The STA receives the third information from the AP in downlink transmission.

In some embodiments, in a case where the AP receives the second information reported by the STA and does not agree with the adjustment of the operating channel by the STA, the AP sends the third information to the STA, wherein the adjustment method of the third information is different from that of the second information. In a case where the AP receives the second information reported by the STA and agrees with the adjustment of the operating channel by the STA, the AP does not need to send the third information.

In some embodiments, in a case where the AP receives the second information reported by the STA and does not agree with the adjustment of the operating channel by the STA, the AP sends the third information to the STA, wherein the adjustment method of the third information is different from that of the second information. In a case where the AP receives the second information reported by the STA and agrees with the adjustment of the operating channel by the STA, the AP sends the third information to the STA, wherein the adjustment method of the third information is the same as that of the second information.

In some embodiments, the AP instructs the STA to adjust to operate on an interference-free subchannel in a case where a sending condition is met. The sending condition includes at least one of: before the interference starts, upon the onset of the interference, upon receiving the first information, upon receiving the second information, or upon the end of the interference.

In some embodiments, similar to the previous embodiment, the operating channel before the adjustment is defined as the current operating channel, and the operating channel after the adjustment is defined as the target operating channel. The target operating channel includes any one of following cases:
**Case 1:** all interference-free subchannels in the current operating channel.
**Case 2:** a part of interference-free subchannels in the current operating channel.
**Case 3:** another interference-free subchannel not belonging to the current operating channel.
**Case 4:** a first interference-free subchannel belonging to the current operating channel and a second interference-free subchannel not belonging to the current operating channel.

In the embodiments of the present disclosure, a plurality of ways to select a part of interference-free subchannels may be present, which will not be listed exhaustively.

In some embodiments, the current operating channel includes an uplink operating channel and a downlink operating channel. The adjustment range of the above adjustment includes any one of following three ranges.

**Range 1:** The uplink operating channel and the downlink operating channel are adjusted simultaneously.

In some embodiments, the uplink operating channel and the downlink operating channel are adjusted identically, but the possibility that the uplink operating channel and the downlink operating channel are adjusted differently in some embodiments is not excluded.

**Range 2:** The uplink operating channel is kept unchanged, and the downlink operating channel is adjusted.

In some embodiments, the STA experiences the intra-device interference. In this case, the uplink transmission of the STA is not affected, and only the downlink transmission is affected. Therefore, the uplink operating channel is kept unchanged, and only the downlink operating channel is adjusted.

**Range 3:** The downlink operating channel is kept unchanged, and the uplink operating channel is adjusted.

In some embodiments, in a case where the transmission of the downlink operating channel of the STA is not affected, for example, periodic downlink transmission is performed outside the interference time, the STA can keep the downlink operating channel unchanged and adjust only the uplink operating channel.

In some embodiments, the adjustment method indicated by the third information is determined based on the first information. The adjustment method indicated by the third information includes at least one of following adjustment methods.

**Adjustment method 1:** In a case where the secondary channel experiences interference and the primary channel is interference-free, the third information instructs the STA to reduce the channel bandwidth of the operating channel to perform the transmission and reception on the primary channel.

**Adjustment method 2:** In a case where the secondary channel experiences interference and at least two contiguous subchannels including the primary channel are interference-free, the third information instructs the STA to reduce the channel bandwidth of the operating channel to perform transmission and reception on the at least two contiguous subchannels.

**Adjustment method 3:** In a case where at least one subchannel including the primary channel experiences interference and at least one secondary channel is interference-free, the third information instructs the STA to reduce the channel bandwidth of the operating channel to perform transmission and reception on the interference-free secondary channel.

**Adjustment method 4:** In a case where a switching condition is met, the third information instructs the STA to switch to a target operating channel different from the current operating channel for transmission and reception.

**Adjustment method 5:** In a case where the interference type is intra-device interference, the third information instructs the STA to keep the uplink channel bandwidth unchanged and reduce the downlink channel bandwidth to perform reception on an interference-free subchannel.

**Adjustment method 6:** In a case where the interference type is intra-device interference and a switching condition is met, the third information instructs the STA to keep the uplink channel bandwidth unchanged and switch to a target operating channel different from the current downlink channel for reception.

In some embodiments, in the above adjustment method 4 and/or adjustment method 6, the switching condition includes at least one of following conditions: at least one subchannel including a primary channel experiences interference, an interference-free subchannel is a non-contiguous subchannel, or an entire operating channel bandwidth of the current operating channel experiences interference.

In some embodiments, as long as at least one subchannel including the primary channel experiences interference, it is considered that the switching condition is met. In some embodiments, the STA needs to operate on contiguous subchannels, and in the case where the interference-free subchannel is a non-contiguous subchannel, it is considered that the switching condition is met. In some embodiments, the STA needs to operate on n contiguous subchannels, and in the case where the number of contiguous subchannels in the interference-free subchannel is less than n, it is considered that the switching condition is met. In some embodiments, in the case where the entire operating channel bandwidth of the current operating channel experiences interference, it is considered that the switching condition is met.

In some embodiments, the STA first sends the second information, and, subsequent to receiving the third information, adjusts to an interference-free subchannel for reception and/or transmission based on the indication of the third information. In some embodiments, the STA first adjusts, based on the first information and/or the second information, to an interference-free subchannel for reception and/or transmission, and in the case of receiving the third information, then readjusts, based on the indication of the third information, to an interference-free subchannel for reception and/or transmission.

In some embodiments, the third information is used to indicate at least one of following information: whether the STA is required to switch the operating channel, indicating a target operating channel for the STA to switch to, a switching start time, a switching completion time, or a switching delay.

In some embodiments, the third information is carried in at least one of following frames: an RTS frame, a BA frame, an ACK frame, A-Control of a data frame, A-Control of a management frame, an A-Control field of an additional QoS Null frame, an additional management frame, MU-RTS, a basic trigger frame, or CTS.

In some embodiments, the User Information field of the MU-RTS includes at least one of: an Associated Identifier field, used to indicate the STA; a Switching field, used to indicate whether the STA indicated by the Associated Identifier field adjusts the operating channel; or a Start-of-Switching Time field, used to indicate the time at which the STA indicated by the Associated Identifier field starts to adjust the operating channel.

In some embodiments, the user information list of the basic trigger frame includes a User Information field and a User Information Extension field that appear in pairs.

The User Information field is used to indicate the STA and allocate a resource unit to the STA; and the User Information Extension field includes a Switching field and/or a Start-of-Switching field.

The Switching field is used to indicate whether the STA adjusts the operating channel, wherein in the case where the STA adjusts the operating channel, a target operating channel is a subchannel on which the resource unit allocated to the STA is located; and the Start-of-Switching Time field is used to indicate the time at which the STA starts to adjust the operating channel.

In summary, in the method according to the embodiments, after the first information and/or the second information of the STA is received, the third information is sent to instruct the STA to adjust to an interference-free subchannel for reception and/or transmission, such that in a case where interference occurs at the STA but not on the AP or interference on the AP is different from interference at the STA, the STA can actively report interference information or suggest the adjustment of the operating channel, and the AP indicates, over the third information, the adjustment of the operating channel determined by the AP, thereby facilitating the AP to perform overall management or adjustment on a plurality of STAs, and avoiding an interfered subchannel as much as possible in the wireless transmission process.

The following provides exemplary descriptions with reference to some transmission scenarios.

### I. The AP is a TXOP holder

### 1 STA autonomous adjustment

### 1.1 Downlink orthogonal frequency-division multiplexing (DL OFDMA)

In the case where the AP is a TXOP holder, the STA, serving as a TXOP responder, carries the first information in uplink transmission to report the interference thereto to the AP in a case of expecting (instantaneously detecting) that at least one subchannel experiences interference.

In some embodiments, the first information includes at least one of: an interference source (OBSS interference, intra-device interference, or interference of an unknown source); periodicity of the interference (periodic or aperiodic); an expected duration of the interference; an expected start time of the interference; an expected end time of the interference; or an interfered subchannel.

The STA being interfered with mainly means that in a case of receiving a signal, the STA experiences interference by another signal and the STA is difficult or unable to successfully receive the signal. In the case of OBSS interference, the STA itself cannot send a signal (since OBSS transmission may be affected), while in the case of intra-device interference, the STA itself can send an uplink signal.

In some embodiments, in the first TXOP, in a case where the STA expects to be interfered with only on the secondary channel (the primary channel is interference-free), especially in a case where an interference-free subchannel is a contiguous subchannel (that is, a case where the AP uses one RU to transmit with the STA, instead of using an MRU to transmit with the STA), subsequent to uplink transmission, the STA reduces its channel bandwidth to exclude the interfered subchannel. For example, in a case where an STA with an operating channel bandwidth of 320 MHz experiences interference on a secondary 160 MHz channel, the channel bandwidth can be reduced to operate on a primary 160 MHz channel.

Exemplarily, referring to FIG. 10, the AP has an operating bandwidth of 80 MHz and includes four subchannels: a primary channel P20, a secondary channel S20-1, a secondary channel S20-2, and a secondary channel S20-3. Three STAs use DL OFDMA transmission. STA 2 has an operating bandwidth of 40 MHz and operates on the primary channel P-20 and the secondary channel S20-1 during the initial phase. In a case of expecting interference on the secondary channel S20-1, STA 2 sends interference information and operating channel information to the AP over a BA frame. The interference information is used to indicate the presence of expected interference and an expected duration of the interference, and the operating channel information is used to indicate reducing the operating bandwidth of the STA 2 to perform transmission and reception on the primary channel P20.

In some embodiments, in the first TXOP, STA 2 performs a plurality of adjustments, including performing an adjustment upon the end of the interference to restore to a state as the start of the first TXOP (that is, explicit indication of restoration). In this case, STA 2 needs to resend the operating channel information to the AP. In some embodiments, in the first TXOP, STA 2 automatically restores its channel bandwidth to a state as the start of the first TXOP (that is, implicit indication of restoration) after an expected interference end time (that is, an interference end time reported to the AP). In this case, STA 2 does not need to resend the operating channel information to the AP. In some embodiments, upon the end of the first TXOP, the STA restores its channel bandwidth to a state as the start of the first TXOP. In some embodiments, the STA indicates reducing its own channel bandwidth in uplink transmission.

In some embodiments, in the first TXOP, in a case where the STA expects to be interfered with on at least one subchannel including the primary channel but at least one interference-free subchannel are present, subsequent to uplink transmission, the STA performs transmission and reception only on the interference-free secondary channel. For example, an STA with an operating channel bandwidth of 160 MHz experiences interference on a primary 80 MHz channel and operates only on a secondary 80 MHz channel.

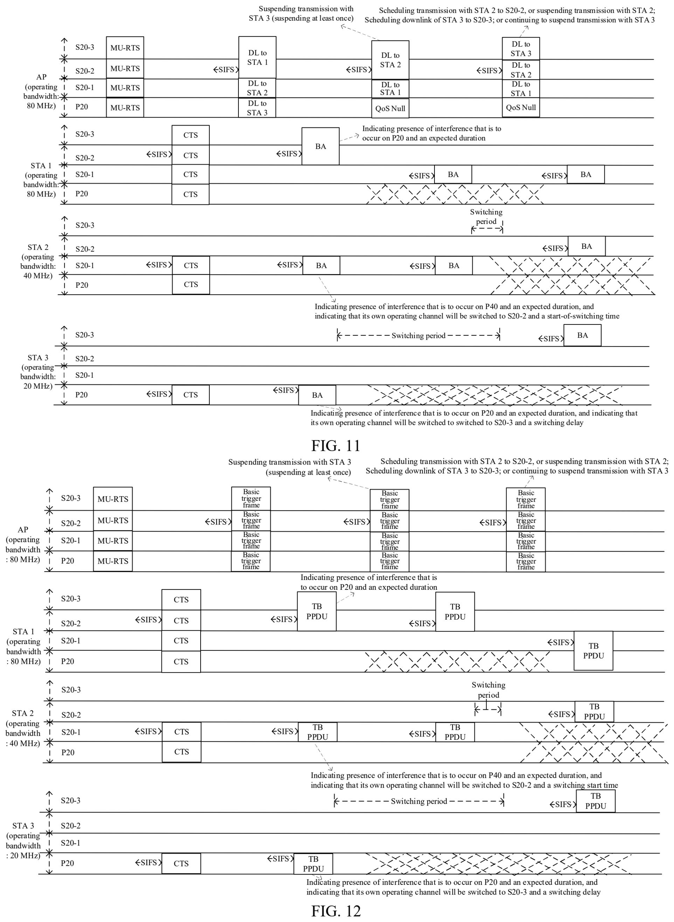

Exemplarily, referring to FIG. 11, the AP has an operating bandwidth of 80 MHz and includes four subchannels: a primary channel P20, a secondary channel S20-1, a secondary channel S20-2, and a secondary channel S20-3. Three STAs use DL OFDMA transmission. STA 1 has an operating bandwidth of 80 MHz and operates on the primary channel P20, the secondary channel S20-1, the secondary channel S20-2, and the secondary channel S20-3 during the initial phase. In a case of expecting interference on the primary channel P20, STA 1 sends interference information and operating channel information to the AP over a BA frame. The interference information is used to indicate the presence of expected interference and an expected duration of the interference, and the operating channel information is used to indicate reducing the operating bandwidth of the STA 1 to perform transmission and reception on the secondary channel S20-1.

In some embodiments, in the first TXOP, STA 1 performs a plurality of adjustments, including performing an adjustment upon the end of the interference to restore to a state as the start of the first TXOP (that is, explicit indication of restoration). In this case, STA 1 needs to resend the operating channel information to the AP. In some embodiments, in the first TXOP, STA 1 automatically restores its channel bandwidth to a state as the start of the first TXOP after an expected interference end time (that is, implicit indication of restoration). In some embodiments, upon the end of the first TXOP, STA 1 restores its channel bandwidth to a state as the start of the first TXOP. In some embodiments, STA 1 indicates performing transmission and reception only on the secondary channel in uplink transmission.

In some embodiments, in the first TXOP, in a case where the STA expects to be interfered with on at least one subchannel including the primary channel, and/or an interference-free subchannel is a non-contiguous subchannel (that is, the AP needs to use an MRU to transmit with the STA, or the AP uses one RU for transmission but a part of bandwidth is wasted), and/or the STA expects that the entire operating channel bandwidth experiences interference, subsequent to uplink transmission, the STA switches its operating channel to an interference-free subchannel. For example, an STA with an operating channel bandwidth of 80 MHz (corresponding to a primary 80 MHz channel of an AP with an operating channel bandwidth of 160 MHz) experiences interference on a primary 20 MHz subchannel and a secondary 40 MHz subchannel, and may switch to operate on a secondary 80 MHz channel of the AP.

Exemplarily, referring to FIG. 10, STA 3 has an operating bandwidth of 20 MHz and initially operates on the primary channel P20. In a case of expecting interference on the primary channel P20, interference information and operating channel information are sent to the AP. The interference information is used to indicate the presence of expected interference on P20 and an expected duration of the interference, and the operating channel information is used to indicate switching to the secondary channel S20-3 for transmission and reception.

Exemplarily, referring to FIG. 11, STA 2 has an operating bandwidth of 40 MHz and initially operates on the primary channel P20 and the secondary channel S20-1 (that is, P40). In a case of expecting interference on P40, interference information and operating channel information are sent to the AP. The interference information is used to indicate that interference is expected on P40 and an expected duration of the interference, and the operating channel information is used to indicate switching to the secondary channel S20-2 for transmission and reception.

Exemplarily, referring to FIG. 11, STA 3 has an operating bandwidth of 20 MHz and initially operates on the primary channel P20. In a case of expecting interference on the primary channel P20, interference information and operating channel information are sent to the AP. The interference information is used to indicate the presence of expected interference on P20 and an expected duration of the interference, and the operating channel information is used to indicate switching to the secondary channel S20-3 for transmission and reception.

In some embodiments, in the first TXOP, each STA performs a plurality of switchings, including performing a switching upon the end of the interference to restore to a state as the start of the first TXOP (that is, explicit indication of restoration). In some embodiments, in the first TXOP, each STA automatically restores its channel bandwidth to a state as the start of the first TXOP after an expected interference end time (that is, implicit indication of restoration). In some embodiments, upon the end of the first TXOP, each STA restores its channel bandwidth to a state as the start of the first TXOP. In some embodiments, in uplink transmission, each STA indicates to the AP its own situation of switching the operating channel, including at least one of: whether to switch the operating channel, and/or a target operating channel to be switched to, and/or a switching start time (by default, the switching starting immediately), and/or a switching completion time (by default, no later than the next transmission start time of the AP), and/or a switching delay (by default, the switching delay being not greater than the SIFS).

In the first TXOP, subsequent to uplink transmission, the AP may schedule transmission with the STA (DL OFDMA) to a target operating channel indicated by the STA, or suspend transmission with the STA, or the AP continues to transmit to the STA on an interfered subchannel (this may cause a transmission failure, such that the AP enters a retransmission process subsequent to failure).

In some embodiments (as illustrated in FIG. 10), in the first TXOP, only a part of TXOP responders (that is, STA 2 and STA 3) experience interference on the primary channel, and the transmission of the AP on the primary channel is not specially processed.

In some embodiments (as illustrated in FIG. 11), in the first TXOP, all TXOP responders experience interference on the primary channel, and the transmission of the AP on the primary channel needs to be specially processed. In some embodiments, to prevent the primary channel from being continuously idle and then being occupied by another STA on the transmission medium, the AP needs to perform transmission on the primary channel to maintain the channel, but cannot transmit valid data (since all TXOP responders experience interference on the primary channel, the transmitted valid data will not be successfully received, which will cause the AP to enter a retransmission procedure). Therefore, only a PPDU used for occupancy is transmitted on the primary channel, wherein the PPDU includes a PPDU preamble and/or a payload of the PPDU, or a CTS frame is carried in a Data field of the primary channel of the PPDU, or a QoS Null frame is carried in a Data field of the primary channel of the PPDU. In some other embodiments, the AP schedules another STA (an STA that does not belong to the first TXOP) to perform transmission on the primary channel, which is not applicable to some scenarios. These scenarios include the possibility that no more STAs are present, other STAs may be in a sleep mode and cannot be scheduled, or no data to be transmitted to other STAs is present.

Since it may take time for the STA to switch the operating channel, different embodiments may require different switching durations. In some embodiments (for example, STA 3 in FIG. 10 and STA 2 in FIG. 11), in a case where the switching delay of the STA is not greater than the SIFS, the STA does not need to indicate the switching completion time or the switching delay to the AP, or indicates using the default switching delay. In some other embodiments (for example, STA 3 in FIG. 11), in a case where the switching delay of the STA is greater than the SIFS, the STA needs to indicate at least two of the switching account start time, the switching completion time, and the switching delay. In this case, the AP needs to suspend downlink transmission with the STA (suspend the downlink transmission at least once), and an idle resource is used for transmission with another STA. The number of transmission suspensions or the duration thereof is related to the length of the switching delay.

A long or short interval may be present between an interference reporting time of the STA (that is, the time at which the STA performs uplink transmission) and a start time at which the primary channel is expected to be interfered with. In some embodiments, since interference has occurred, is occurring, or is expected to occur before the next transmission of the AP is completed (that is, the transmission of the next downlink PPDU is completed), that is, in the case of a short interval (or the case where interference immediately occurs) (for example, STA 2 and STA 3 in FIG. 10 and STA 3 in FIG. 11), the STA needs to complete operating channel switching after interference reporting is completed and before the next transmission of the AP starts. In this case, the STA does not need to indicate the switching start time, or indicates using the default switching start time. In some other embodiments, interference occurs after the next transmission of the AP is completed or at a later time, that is, in the case of a long interval (or in the case where interference occurs later) (for example, STA 2 in FIG. 11), and the STA needs to indicate the switching start time.

During a period from the start to the completion of the STA's switching, the AP cannot perform downlink transmission to the STA; that is, the AP needs to suspend downlink transmission with the STA, and an idle resource may be used for transmission with another STA.

FIGS. 10 and 11 illustrate a downlink HE/EHT MU PPDU transmission with immediate UL OFDMA acknowledgment. The downlink transmission carries one trigger frame or one frame including a TRS Control field, and the uplink transmission is OFDMA block acknowledgment.

### 1.2 Uplink orthogonal frequency-division multiplexing (UL OFDMA)

For uplink multiuser transmission (UL MU transmission), a similar method may also be used as follows.

### 1.2.1 Both the uplink operating channel and the downlink operating channel are changed

In the case of UL MU transmission, the STA, serving as the TXOP responder, may also report the interference thereto and/or operating channel information to the AP in an uplink TB PPDU. The operating channel information is used to indicate at least one of: reducing its own channel bandwidth, performing transmission and reception only on a secondary channel, or a situation of switching its own operating channel.

Subsequent to uplink transmission, the STA may reduce its channel bandwidth to exclude the interfered subchannel and/or perform transmission and reception only on the secondary channel and/or switch its operating channel to an interference-free subchannel. To ensure that the STA operating on the secondary channel can perform reception normally, the downlink trigger frame of the AP can only be sent over a MU PPDU or a Non-HT duplicate PPDU.

Exemplarily, as illustrated in FIG. 12, the AP has an operating bandwidth of 80 MHz and includes four subchannels: a primary channel P20, a secondary channel S20-1, a secondary channel S20-2, and a secondary channel S20-3. Three STAs use UL OFDMA transmission. STA 1 has an operating bandwidth of 80 MHz and operates on the primary channel P20, the secondary channel S20-1, the secondary channel S20-2, and the secondary channel S20-3 during the initial phase. In a case of expecting interference on the primary channel P20, STA 1 sends interference information and operating channel information to the AP over a TB PPDU frame. The interference information is used to indicate the presence of expected interference and an expected duration of the interference, and the operating channel information is used to indicate reducing the operating bandwidth to perform transmission and reception on the secondary channels S20-2 and S20-3.

STA 2 has an operating bandwidth of 40 MHz and operates on the primary channel P20 and the secondary channel S20-1 (that is, P40) during the initial phase. In a case of expecting interference on P40, STA 2 sends interference information and operating channel information to the AP over a TB PPDU frame. The interference information is used to indicate the presence of expected interference and an expected duration of the interference, and the operating channel information is used to indicate reducing the operating bandwidth to perform transmission and reception on the secondary channel S20-2.

STA 3 has an operating bandwidth of 20 MHz and operates on the primary channel P20 during the initial phase. In a case of expecting interference on the primary channel P20, STA 2 sends interference information and operating channel information to the AP over a TB PPDU frame. The interference information is used to indicate that interference is expected and an expected duration of the interference, and the operating channel information is used to indicate reducing the operating bandwidth to perform transmission and reception on the secondary channel S20-3.

The above method can be applicable to at least one of following scenarios: a case where the STA expects to be interfered with only on the secondary channel (the primary channel is interference-free), especially a case where an interference-free subchannel is a contiguous subchannel (that is, a case where the AP may use one RU to perform transmission with the STA, but does not use an MRU to perform transmission with the STA); a case where the STA expects to be interfered with on at least one subchannel including the primary channel but at least one subchannel is interference-free; or a case where the STA expects to be interfered with on at least one subchannel including the primary channel, and/or an interference-free subchannel is a non-contiguous subchannel (that is, the AP needs to use an MRU to perform transmission with the STA, or the AP uses one RU for transmission but a part of bandwidth is wasted), and/or the STA expects that the entire operating channel bandwidth experiences interference.

This is consistent with the processing method of the DL OFDMA, and reference can be made to the related descriptions of the DL OFDMA.

### 1.2.2 Only the downlink operating channel is changed

The STA being interfered with mainly means that in the case of receiving a signal, the STA is interfered with by another signal and the STA is difficult or unable to successfully receive the signal. In the case of OBSS interference, the STA itself cannot send a signal (since OBSS transmission may be affected), while in the case of intra-device interference, the STA itself can send a signal. For UL MU transmission, in some embodiments, the uplink of the STA is not affected by interference, but the STA is affected by the interference in the case of receiving the downlink response of the AP. Therefore, the STA may not change its own uplink transmit channel, but only change its own downlink receive channel. The STA may report the interference thereto and/or operating channel information to the AP in the TB PPDU in uplink transmission (for example, an A-Control field of a carried data frame, and/or an A-Control field of a management frame, and/or an A-Control field of an additional QoS Null frame, and/or an additional management frame). The operating channel information is used to indicate at least one of: reducing its own receive channel bandwidth, performing reception only on a secondary channel, or switching to an interference-free subchannel for reception.

Subsequent to uplink transmission, the STA may reduce its channel bandwidth to exclude the interfered subchannel and/or perform reception only on at least one secondary channel and/or switch to at least one interference-free subchannel for reception. To ensure that the STA operating on the secondary channel can perform reception normally, the downlink trigger frame of the AP can only be sent over a Non-HT Duplicate PPDU.

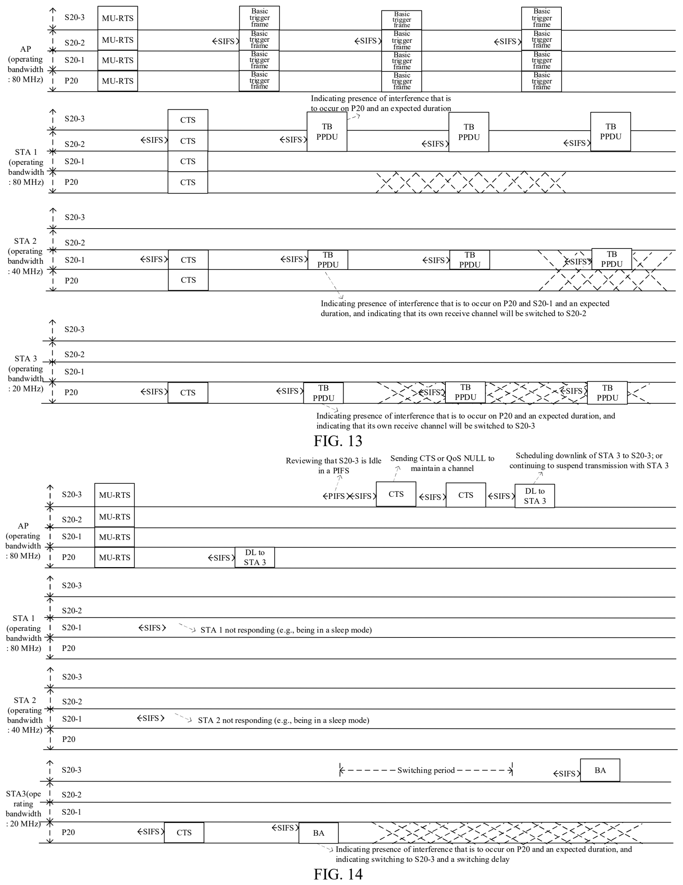

Exemplarily, as illustrated in FIG. 13, the AP has an operating bandwidth of 80 MHz and includes four subchannels: a primary channel P20, a secondary channel S20-1, a secondary channel S20-2, and a secondary channel S20-3. Three STAs use UL OFDMA transmission. STA 1 has an operating bandwidth of 80 MHz and operates on the primary channel P20, the secondary channel S20-1, the secondary channel S20-2, and the secondary channel S20-3 during the initial phase. In a case of expecting interference on the primary channel P20, STA 1 sends interference information and operating channel information to the AP over a TB PPDU frame. The interference information is used to indicate the presence of expected interference and an expected duration of the interference, and the operating channel information is used to indicate reducing the operating bandwidth to perform reception on the secondary channels S20-2 and S20-3.

STA 2 has an operating bandwidth of 40 MHz and operates on the primary channel P20 and the secondary channel S20-1 during the initial phase. In a case of expecting interference on the primary channel P20 and the secondary channel S20-1, STA 2 sends interference information and operating channel information to the AP over a TB PPDU frame. The interference information is used to indicate the presence of expected interference and an expected duration of the interference, and the operating channel information is used to indicate switching the downlink operating bandwidth of the STA 2 to perform reception on the secondary channel S20-2.

STA 3 has an operating bandwidth of 20 MHz and operates on the primary channel P20 during the initial phase. In a case of expecting interference on the primary channel P20, STA 2 sends interference information and operating channel information to the AP over a TB PPDU frame. The interference information is used to indicate that interference is expected and an expected duration of the interference, and the operating channel information is used to indicate switching the downlink operating bandwidth of the STA 3 to perform reception on the secondary channel S20-3.

### 1.3 Uplink and downlink orthogonal frequency-division multiplexing (OFDM), i.e., single STA

As an example, the above method is also applicable in a case where only one TXOP responder is present in the first TXOP.

Exemplarily, as illustrated in FIG. 14, the AP has an operating bandwidth of 80 MHz and includes four subchannels: a primary channel P20, a secondary channel S20-1, a secondary channel S20-2, and a secondary channel S20-3. Only STA 3 of the three STAs uses DL/UL OFDM transmission, and STA 1 and STA 2 are in an idle state.

STA 3 has an operating bandwidth of 20 MHz and operates on the primary channel P20 during the initial phase. In a case of expecting interference on the primary channel P20, STA 2 sends interference information and operating channel information to the AP over a TB PPDU frame. The interference information is used to indicate that interference is expected and an expected duration of the interference, and the operating channel information is used to indicate switching the downlink operating bandwidth to perform reception on the secondary channel S20-3.

Prior to the successful switch of STA 3, the AP needs to review that the subchannel S20-3 is idle in the PIFS prior to sending the CTS and/or the QoS Null on a corresponding subchannel to protect the channel. In a case where the subchannel S20-3 is continuously busy, the AP can only end transmission with STA 3, and then compete again for a TXOP.

### 1.4 AP instructing STA to switch

### 1.4.1 Aggregation indication during downlink transmission

Subsequent to receiving the interference information and/or the operating channel information of the STA, the AP indicates third information to the STA in downlink transmission. The third information is used to indicate the adjustment of the operating channel of the STA by the AP. The adjustment method includes, but is not limited to, at least one of: whether the STA is required to switch the operating channel; a target operating channel to be switched to by the STA; a switching start time (by default, the switching starting immediately); or a switching completion time (by default, no later than the next transmission start time of the AP).

Note: The switching delay depends on the capability of the STA, so the switching delay is not controlled by the AP and does not need to be indicated by the AP. However, the AP may reserve sufficient time based on the capability of the STA to indicate the switching completion time, and the switching time is not less than the switching delay required by the STA.

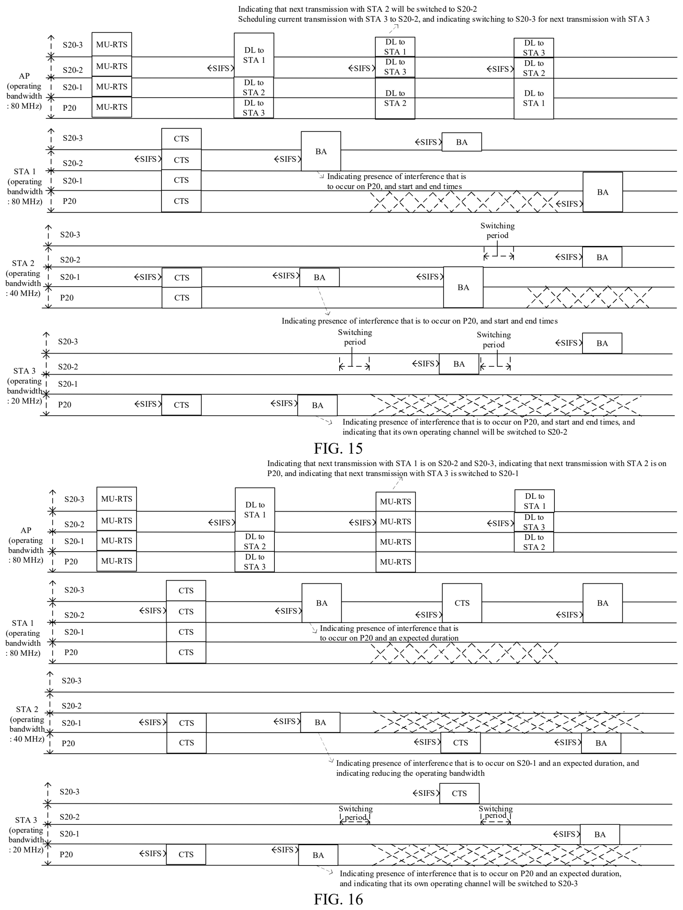

For a case where interference occurs immediately, that is, the STA has switched the operating channel, the AP may request the STA to switch to another or more subchannels. Exemplarily, referring to FIG. 15, the operating bandwidth of STA 3 is 20 MHz. Subsequent to expecting interference on the primary channel P20, STA 3 sends interference information and operating channel information to the AP. The interference information is used to indicate interference on P20, and the operating channel information is used to indicate switching to S20-2 for reception. Subsequent to receiving the operating channel information, the AP schedules the current transmission with STA 3 to the secondary channel S20-2, and indicates switching to the secondary channel S20-3 for the next transmission with STA 3.

For a case where interference occurs later, that is the STA has not switched the operating channel, or a channel that the AP instructs the STA to switch to is different from a channel indicated by the STA, the AP may request the STA to switch to one or more subchannels. Exemplarily, referring to FIG. 15, STA 2 has an operating bandwidth of 40 MHz and operates on the primary channel P20 and the secondary channel S20-1 during the initial phase. Subsequent to expecting interference on the primary channel P20, STA 2 sends interference information to the AP, wherein the interference information is used to indicate the interference on P20. Subsequent to receiving the interference information, the AP indicates switching to the secondary channel S20-2 for the next transmission with STA 2.

Compared with the above embodiments, the embodiments give the AP a more flexible resource scheduling opportunity. The embodiments are applicable to DL OFDMA (downlink transmission to a plurality of STAs), UL OFDMA (simultaneous uplink transmission from a plurality of STAs), and DL OFDM (single STA).

### 1.4.2 Adding MU-RTS/CTS or RTS/CTS interaction

Subsequent to receiving the interference information and/or the operating channel information of STAs, the AP sends a MU-RTS trigger frame or an RTS frame over a non-HT duplicate PPDU (to ensure that all STAs can receive the frames) to reschedule all the STAs, and indicates third indication information to the STAs, wherein the third indication information is used for the adjustment of the operating channels of the STAs by the AP. The adjustment method includes, but is not limited to, at least one of: whether the STA is required to switch the operating channel; a target operating channel to be switched to by the STA; a switching start time (by default, the switching starting immediately); or a switching completion time (by default, no later than the next transmission start time of the AP).

Exemplarily, referring to FIG. 16, STA 1 indicates the presence of interference that is to occur on the primary channel P20 and an expected duration of the interference; STA 2 indicates the presence of interference that is to occur on the secondary channel S20-1 and an expected duration of the interference; STA 3 indicates the presence of interference that is to occur on P20 and an expected duration of the interference. The AP instructs each STA to switch its own operating channel by indicating the third information to the three STAs over the MU-RTS frame. The AP indicates that the next transmission with STA 1 is on the secondary channel S20-2 and the secondary channel S20-3; the AP indicates that the next transmission with STA 2 is on the primary channel P20; and the AP indicates that the next transmission with STA 3 is on the secondary channel S20-1.

### 1.5 The AP adjusting and switching its own operating channel

Subsequent to receiving the interference information and/or the operating channel information of the STA, the AP may also switch its own operating channel, including changing the primary channel only in all current subchannels, or changing the primary channel in all current subchannels and reducing the total channel bandwidth.

After the AP switches the operating channel, the primary channel may still be an interfered channel of an STA. Therefore, the STA needs to support reception and transmission only on the secondary channel.

### II. The STA is a TXOP owner

### 2.1 Both the uplink operating channel and the downlink operating channel are changed

In a case where the STA is a TXOP holder, in the first TXOP, the STA reports information about interference thereto and/or operating channel information to the AP in uplink transmission. The uplink transmission may be at least one of: an A-Control field of a carried data frame, an A-Control field of a management frame, an A-Control field of an additional QoS Null frame, or an additional management frame.

The operating channel information is used to indicate at least one of: reducing its own channel bandwidth, performing transmission and reception only on the primary channel, performing transmission and reception only on the secondary channel, or switching the operating channel.

Subsequent to uplink transmission, the STA may reduce its own channel bandwidth to exclude the interfered subchannel, and the STA adjusts its own operating channel to perform at least one of: performing transmission and reception only on the primary channel, performing transmission and reception only on the secondary channel, or switching its operating channel to an interference-free subchannel. In this case, the downlink BA/ACK frame of the AP can only be transmitted over a MU PPDU or a Non-HT Duplicate PPDU, and covers the target operating channel indicated by the STA to ensure that the STA can also receive the BA/ACK frame on the indicated target operating channel, which is also used to maintain the channel on a plurality of subchannels.

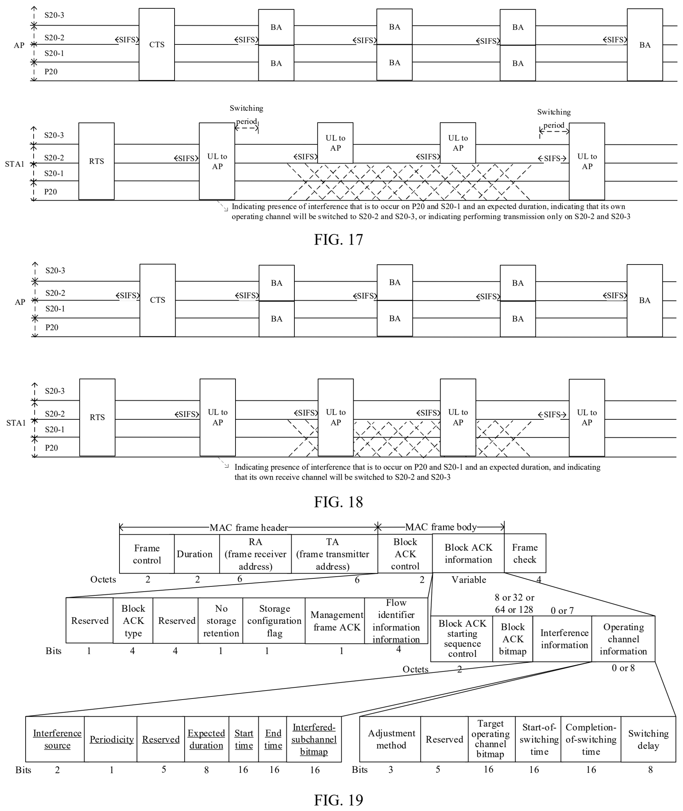

Exemplarily, as illustrated in FIG. 17, the operating bandwidth of STA 1 is 80 MHz. STA 1 indicates the presence of interference that is to occur on the primary channel P20 and the secondary channel S20-1 and an expected duration of the interference, and indicates switching its own operating channel to the secondary channel S20-2 and the secondary channel S20-3 for transmission and reception. In a case of replying with the downlink BA frame, the AP needs to use the MU PPDU or the Non-HT Duplicate PPDU for transmission, and covers the secondary channel S20-2 and the secondary channel S20-3 indicated by STA 1.

In a case where the operating bandwidth of the STA is less than the operating bandwidth of the AP, the STA cannot switch to a subchannel outside its own operating bandwidth, since the subchannel is not occupied in a case of acquiring the first TXOP.

### 2.2 Only the downlink operating channel is changed

Since the STA being interfered with mainly means that in the case of receiving a signal, the STA is interfered with by another signal and the STA is difficult or unable to successfully receive the signal, in some embodiments, the STA does not change its own uplink transmit channel, but only changes its own downlink receive channel. The STA reports information about interference thereto and/or operating channel information to the AP in uplink transmission.

The operating channel information is used to indicate at least one of: reducing its own receive channel bandwidth, performing reception only on a primary channel, performing reception only on a secondary channel, or switching to an interference-free subchannel for reception.

Subsequent to uplink transmission, the STA may reduce its own channel bandwidth to exclude the interfered subchannel, and the STA adjusts its own operating channel to perform at least one of: performing reception only on the primary channel, performing reception only on the secondary channel, or switching its operating channel to an interference-free subchannel. In this case, the downlink BA/ACK frame of the AP can only be transmitted over a MU PPDU or a Non-HT Duplicate PPDU, and covers the target operating channel indicated by the STA to ensure that the STA can also receive the BA/ACK frame on the indicated target operating channel, which is also used to maintain the channel on a plurality of subchannels. For example, the STA may perform transmission at 80 MHz, and the PPDU sent by the AP and carrying the BA covers a secondary 40 MHz channel indicated by the STA.

Exemplarily, as illustrated in FIG. 18, the operating bandwidth of STA 1 is 80 MHz. STA 1 indicates the presence of interference that is to occur on the primary channel P20 and the secondary channel S20-1 and an expected duration of the interference, and indicates switching its own downlink receive channel to the secondary channel S20-2 and the secondary channel S20-3 for reception while keeping the uplink operating channel unchanged. In the case of replying with the downlink BA frame, the AP needs to use the MU PPDU or the Non-HT Duplicate PPDU for transmission, and covers the secondary channel S20-2 and the secondary channel S20-3 indicated by STA 1.

In this way, compared with 2.2.1 in which both the transmit channel and the receive channel are changed, channel resources can be more effectively utilized, so as to reduce the impact on transmission efficiency caused by interference as much as possible.

In the above embodiments, the first information and/or the second information is carried in at least one of following information: an RTS frame, a BA frame, an ACK frame, A-Control of a data frame, A-Control of a management frame, an A-Control field of an additional QoS Null frame, or an additional management frame.

Several possible signaling design methods are illustrated hereinafter.

### III. Signaling

### 3.1 BA frame

Exemplarily, referring to FIG. 19, the BA frame includes a MAC frame header and a MAC frame body. The MAC frame body includes: a Block Acknowledgment Control field, a Block Acknowledgment Information field, and a Frame Check field. In some embodiments, an Interference Information field and an Operating Channel Information field are added to the Block Acknowledgment Information field.

Among five reserved bits in the Block Acknowledgment Control field, one bit is used to indicate whether the Interference Information field is present (Interference Info Present), and/or one bit is used to indicate whether the Operating Channel Information field is present (Operating Channel Info Present). In some embodiments, a value of 1 represents presence, and a value of 0 represents absence. In some other embodiments, a value of 0 represents presence, and a value of 1 represents absence. In a case where it is indicated that the Operating Channel Information field is absent, it is also implicitly indicated that the STA does not adjust the operating channel.

In the Interference Information field:
An Interference Source field is used to indicate that the interference is OBSS interference, intra-device interference, or interference of an unknown source. The value should be unique. For example, 0 represents OBSS interference, 1 represents intra-device interference, 2 represents interference of an unknown source, and 3 represents a reserved value. For another example, 0 is a reserved value, 1 represents OBSS interference, 2 represents intra-device interference, and 3 represents interference of an unknown source.

A Periodicity field is used to indicate whether the interference is periodic interference or aperiodic interference. For example, a value of 0 represents periodic, and a value of 1 represents aperiodic. For another example, a value of 1 represents periodic, and a value of 0 represents aperiodic.

An Expected Duration field is used to indicate an expected duration of interference. For example, in units of slot times (a slot time = 9 microseconds), 0 represents one slot time, 1 represents two slot times, 2 represents three slot times, and so on. For another example, in units of SIFS SIFS times (an SIFS Time = 16 microseconds), 0 represents one SIFS time, 1 represents two SIFS times, 2 represents three SIFS times, and so on. For yet another example, in units of microseconds, 0 represents one microsecond, 1 represents two microseconds, 2 represents three microseconds, and so on. For still another example, in units of microseconds, 0 represents one microsecond, 1 represents two microseconds, 2 represents four microseconds, 3 represents eight microseconds, that is, calculating a power with the base of 2 and a value of the field as the exponent, and so on.

A Start Time field is used to indicate an expected start time of interference in microseconds. It may be a partial timing synchronization function timer of the expected start time of the interference, or an offset value between the expected start time of the interference and the current time. The partial timing synchronization function timer may represent truncated data of the timing synchronization function timer, e.g., taking the least significant 16 bits from the 64 bits of the TSF timer.

An End Time field is used to indicate an expected end time of interference in microseconds. It may be a partial timing synchronization function timer of the expected end time of the interference, or an offset value between the expected end time of the interference and the current moment, or an offset value between the expected end time of the interference and the expected start time of the interference (that is, the expected duration of the interference).

An Interfered-subchannel Bitmap field is used to indicate which subchannels are expected to be interfered with. Each bit represents one 20 MHz subchannel. For example, the 1^{st} bit represents a primary 20 MHz subchannel, the 2^{nd} bit represents a secondary 20 MHz subchannel in a primary 40 MHz, the 3^{rd} bit represents a low frequency 20 MHz subchannel in a secondary 40 MHz in a primary 80 MHz, the 4^{th} bit represents a high frequency 20 MHz subchannel in the secondary 40 MHz in the primary 80 MHz, and so on, with the 16^{th} bit representing the highest frequency 20 MHz subchannel in secondary 160 MHz in 320 MHz. For another example, sorting may be performed based on the magnitude of the center frequency of each subchannel, and a primary 20 MHz subchannel may be at any position within the 16 bits. A bit value of 1 indicates that a corresponding subchannel experiences interference, and a bit value of 0 indicates that a corresponding subchannel is interference-free. Alternatively, a bit value of 0 indicates that a corresponding subchannel experiences interference, and a bit value of 1 indicates that a corresponding subchannel is interference-free. The mapping sequence of the subchannels in the bitmap is not limited in the embodiments of the present disclosure.

In the Operating Channel Information field:
An Adjustment Method field is used to indicate the specific method for adjusting the operating channel. As an example, the Adjustment Method field is used to indicate at least one of: reducing its own channel bandwidth (the primary channel being still in use); performing transmission and reception only on a secondary channel (without using a primary channel); switching its own operating channel (the subchannel used possibly being completely different from the subchannel originally used by the STA); or performing reception only on a secondary channel (performing transmission still on the original uplink operating channel without adjustment).

The value corresponding to each method should be unique. For example, 0 represents no adjustment, 1 represents reducing its own channel bandwidth, 2 represents performing transmission and reception only on a secondary channel, 3 represents switching its own operating channel, 4 represents performing reception only on a secondary channel, and 5 to 7 are reserved.

A Target Operating Channel Bitmap field is used to indicate an operating channel after the adjustment. Each bit represents one 20 MHz subchannel. For example, the 1^{st} bit represents a primary 20 MHz subchannel, the 2^{nd} bit represents a secondary 20 MHz subchannel in a primary 40 MHz, the 3^{rd} bit represents a low frequency 20 MHz subchannel in a secondary 40 MHz in a primary 80 MHz, the 4^{th} bit represents a high frequency 20 MHz subchannel in the secondary 40 MHz in the primary 80 MHz, and so on, with the 16^{th} bit representing the highest frequency 20 MHz subchannel in secondary 160 MHz in 320 MHz. For another example, sorting may be performed based on the magnitude of the center frequency of each subchannel, and a primary 20 MHz subchannel may be at any position within the 16 bits. A bit value of 1 indicates operating on a corresponding subchannel, and a bit value of 0 indicates not operating on a corresponding subchannel. Alternatively, a bit value of 0 indicates operating on a corresponding subchannel, and a bit value of 1 indicates not operating on a corresponding subchannel.

A Start-of-Switching Time field is used to indicate the time at which the STA itself starts to adjust the operating channel. It may be a partial timing synchronization function timer of a start time of operating channel adjustment, or an offset value between the start time of operating channel adjustment and the current time.

A Completion-of-Switching Time field is used to indicate the time at which the STA expects to complete the adjustment of the operating channel in microseconds. It may be a partial timing synchronization function timer of a completion time of operating channel adjustment, or an offset value between the completion time of start of operating channel and the current time.

A Switching Delay field indication is used for a difference value, in microseconds, between the time at which the STA expects to complete the adjustment of the operating channel and the start time of operating channel adjustment.

### 3.2 A-Control of a data frame or a management frame

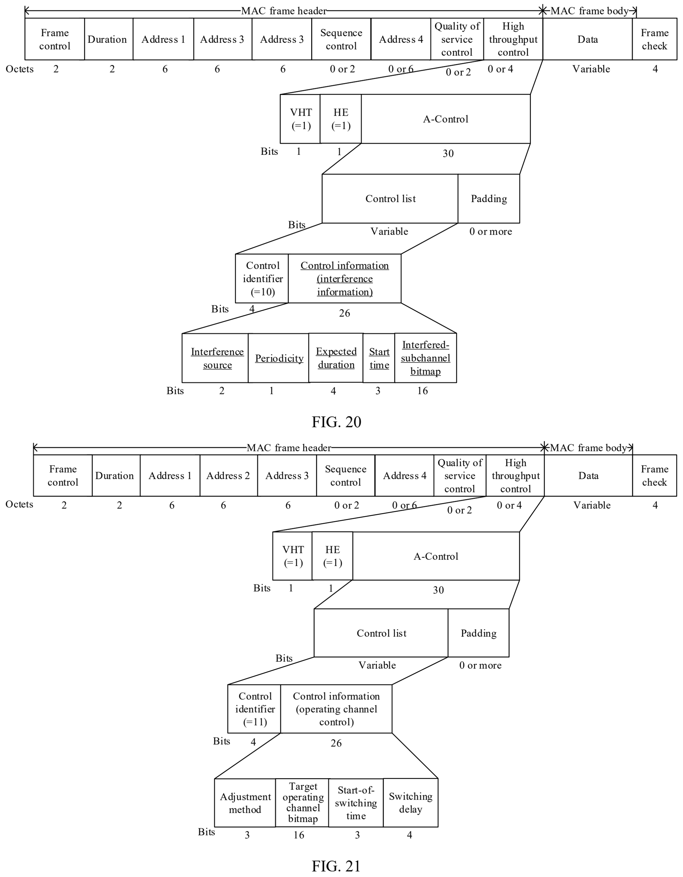

Exemplarily, referring to FIG. 20, the A-Control of the data frame or the management frame includes a control list. The control list includes one or more types of control information. A new type of control information (with a Control Identifier field value being the current reserved value, for example, 10) is added to the A-Control field of the data frame and/or the management frame, and the interference information is carried therein.

In the Interference Information field:
An Interference Source field is used to indicate that the interference is OBSS interference, intra-device interference, or interference of an unknown source. The value should be unique. For example, 0 represents OBSS interference, 1 represents intra-device interference, 2 represents interference of an unknown source, and 3 represents a reserved value. For another example, 0 is a reserved value, 1 represents OBSS interference, 2 represents intra-device interference, and 3 represents interference of an unknown source.

A Periodicity field is used to indicate whether the interference is periodic interference or aperiodic interference. For example, a value of 0 represents periodic, and a value of 1 represents aperiodic. For another example, a value of 1 represents periodic, and a value of 0 represents aperiodic.

An Expected Duration field is used to indicate an expected duration of interference. For example, in units of slot times (a slot time = 9 microseconds), 0 represents one slot time, 1 represents two slot times, 2 represents three slot times, and so on. For another example, in units of SIFS times (an SIFS Time = 16 microseconds), 0 represents one SIFS time, 1 represents two SIFS times, 2 represents three SIFS times, and so on. For yet another example, in units of microseconds, 0 represents one microsecond, 1 represents two microseconds, 2 represents three microseconds, and so on. For still another example, in units of microseconds, 0 represents one microsecond, 1 represents two microseconds, 2 represents four microseconds, 3 represents eight microseconds, that is, calculating a power with the base of 2 and a value of the field as the exponent, and so on.

A Start Time field is used to indicate an expected start time of interference in microseconds. It may be a partial timing synchronization function timer of the expected start time of the interference, or an offset value between the expected start time of the interference and the current time. The partial timing synchronization function timer may represent truncated data of the timing synchronization function timer, e.g., taking the least significant 16 bits from the 64 bits of the TSF timer.

An Interfered-subchannel Bitmap field is used to indicate which subchannels are expected to be interfered with. Each bit represents one 20 MHz subchannel. For example, the 1^{st} bit represents a primary 20 MHz subchannel, the 2^{nd} bit represents a secondary 20 MHz subchannel in a primary 40 MHz, the 3^{rd} bit represents a low frequency 20 MHz subchannel in a secondary 40 MHz in a primary 80 MHz, the 4^{th} bit represents a high frequency 20 MHz subchannel in the secondary 40 MHz in the primary 80 MHz, and so on, with the 16^{th} bit representing the highest frequency 20 MHz subchannel in secondary 160 MHz in 320 MHz. For another example, sorting may be performed based on the magnitude of the center frequency of each subchannel, and a primary 20 MHz subchannel may be at any position within the 16 bits. A bit value of 1 indicates that a corresponding subchannel experiences interference, and a bit value of 0 indicates that a corresponding subchannel is interference-free. Alternatively, a bit value of 0 indicates that a corresponding subchannel experiences interference, and a bit value of 1 indicates that a corresponding subchannel is interference-free. The mapping sequence of the subchannel in the bitmap is not limited in the embodiments of the present disclosure.

Exemplarily, referring to FIG. 21, the A-Control of the data frame or the management frame includes a control list. The control list includes one or more types of control information. A new type of control information (with a Control Identifier field value being the current reserved value, for example, 10) is added to the A-Control field of the data frame and/or the management frame, and the operating channel information is carried therein.

In the Operating Channel Information field:
An Adjustment Method field is used to indicate the specific method for adjusting the operating channel. As an example, the Adjustment Method field is used to indicate at least one of: reducing its own channel bandwidth (the primary channel being still in use); performing transmission and reception only on a secondary channel (without using a primary channel); switching its own operating channel (the subchannel used possibly being completely different from the subchannel originally used by the STA); or performing reception only on a secondary channel (performing transmission still on the original uplink operating channel without adjustment).

The value corresponding to each method should be unique. For example, 0 represents no adjustment, 1 represents reducing its own channel bandwidth, 2 represents performing transmission and reception only on a secondary channel, 3 represents switching its own operating channel, 4 represents performing reception only on a secondary channel, and 5 to 7 are reserved.

A Target Operating Channel Bitmap field is used to indicate an operating channel after the adjustment. Each bit represents one 20 MHz subchannel. For example, the 1^{st} bit represents a primary 20 MHz subchannel, the 2^{nd} bit represents a secondary 20 MHz subchannel in a primary 40 MHz, the 3^{rd} bit represents a low frequency 20 MHz subchannel in a secondary 40 MHz in a primary 80 MHz, the 4^{th} bit represents a high frequency 20 MHz subchannel in the secondary 40 MHz in the primary 80 MHz, and so on, with the 16^{th} bit representing the highest frequency 20 MHz subchannel in secondary 160 MHz in 320 MHz. For another example, sorting may be performed based on the magnitude of the center frequency of each subchannel, and a primary 20 MHz subchannel may be at any position within the 16 bits. A bit value of 1 indicates operating on a corresponding subchannel, and a bit value of 0 indicates not operating on a corresponding subchannel. Alternatively, a bit value of 0 indicates operating on a corresponding subchannel, and a bit value of 1 indicates not operating on a corresponding subchannel.

A Start-of-Switching Time field is used to indicate the time at which the STA itself starts to adjust the operating channel. It may be a partial timing synchronization function timer of a start time of operating channel adjustment, or an offset value between the start time of operating channel adjustment and the current time.

A Switching Delay field indication is used for a difference value, in microseconds, between the time at which the STA expects to complete the adjustment of the operating channel and the start time of operating channel adjustment.

### 3.3 Newly defined management frame

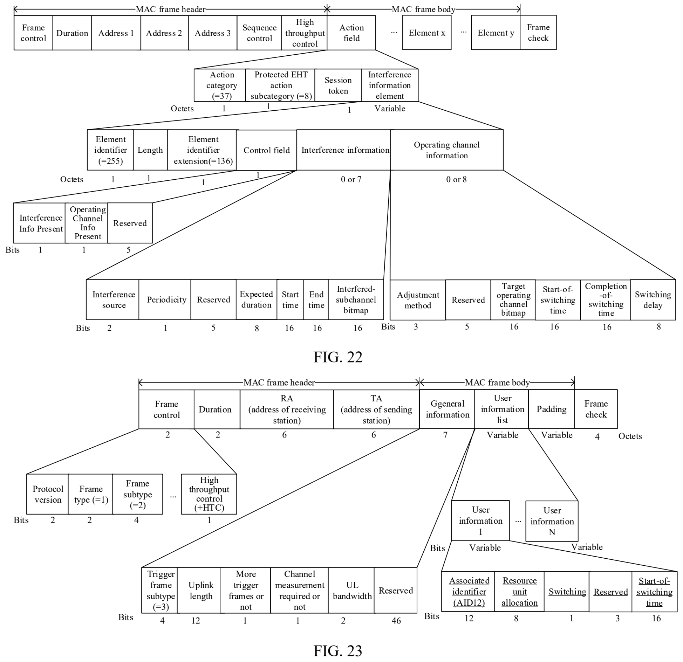

Exemplarily, referring to FIG. 22, an action frame (a management frame) may be newly defined to carry the interference information and/or the operating channel information therein. The management frame includes a MAC frame header and a MAC frame body. The MAC frame body includes an Action field, wherein an interference information element is added to the Action field.

In a Control field in the interference information element, one bit is used to indicate whether the Interference Information field is present, and/or one bit is used to indicate whether the Operating Channel Information field is present. In some embodiments, a value of 1 represents presence, and a value of 0 represents absence. In some other embodiments, a value of 0 represents presence, and a value of 1 represents absence. In the case where it is indicated that the Operating Channel Information field is absent, it also implicitly indicated that the STA does not adjust the operating channel.

In the Interference Information field:
An Interference Source field is used to indicate that the interference is OBSS interference, intra-device interference, or interference of an unknown source. The value should be unique. For example, 0 represents OBSS interference, 1 represents intra-device interference, 2 represents interference of an unknown source, and 3 represents a reserved value. For another example, 0 is a reserved value, 1 represents OBSS interference, 2 represents intra-device interference, and 3 represents interference of an unknown source.

A Periodicity field is used to indicate whether the interference is periodic interference or aperiodic interference. For example, a value of 0 represents periodic, and a value of 1 represents aperiodic. For another example, a value of 1 represents periodic, and a value of 0 represents aperiodic.

An Expected Duration field is used to indicate an expected duration of interference. For example, in units of slot times (a slot time = 9 microseconds), 0 represents one slot time, 1 represents two slot times, 2 represents three slot times, and so on. For another example, in units of SIFS times (an SIFS Time = 16 microseconds), 0 represents one SIFS time, 1 represents two SIFS times, 2 represents three SIFS times, and so on. For yet another example, in units of microseconds, 0 represents one microsecond, 1 represents two microseconds, 2 represents three microseconds, and so on. For still another example, in units of microseconds, 0 represents one microsecond, 1 represents two microseconds, 2 represents four microseconds, 3 represents eight microseconds, that is, calculating a power with the base of 2 and a value of the field as the exponent, and so on.

A Start Time field is used to indicate an expected start time of interference in microseconds. It may be a partial timing synchronization function timer of the expected start time of the interference, or an offset value between the expected start time of the interference and the current time. The partial timing synchronization function timer may represent truncated data of the timing synchronization function timer, e.g., taking the least significant 16 bits from the 64 bits of the TSF timer.

An End Time field is used to indicate an expected end time of interference in microseconds. It may be a partial timing synchronization function timer of the expected end time of the interference, or an offset value between the expected end time of the interference and the current moment, or an offset value between the expected end time of the interference and the expected start time of the interference (that is, the expected duration of the interference).

An Interfered-subchannel Bitmap field is used to indicate which subchannels are expected to be interfered with. Each bit represents one 20 MHz subchannel. For example, the 1^{st} bit represents a primary 20 MHz subchannel, the 2^{nd} bit represents a secondary 20 MHz subchannel in a primary 40 MHz, the 3^{rd} bit represents a low frequency 20 MHz subchannel in a secondary 40 MHz in a primary 80 MHz, the 4^{th} bit represents a high frequency 20 MHz subchannel in the secondary 40 MHz in the primary 80 MHz, and so on, with the 16^{th} bit representing the highest frequency 20 MHz subchannel in secondary 160 MHz in 320 MHz. For another example, sorting may be performed based on the magnitude of the center frequency of each subchannel, and a primary 20 MHz subchannel may be at any position within the 16 bits. A bit value of 1 indicates that a corresponding subchannel experiences interference, and a bit value of 0 indicates that a corresponding subchannel is interference-free. Alternatively, a bit value of 0 indicates that a corresponding subchannel experiences interference, and a bit value of 1 indicates that a corresponding subchannel is interference-free. The mapping sequence of the subchannel in the bitmap is not limited in the embodiments of the present disclosure.

In the Operating Channel Information field:
An Adjustment Method field is used to indicate the specific method for adjusting the operating channel. As an example, the Adjustment Method field is used to indicate at least one of: reducing its own channel bandwidth (the primary channel being still in use); performing transmission and reception only on a secondary channel (without using a primary channel); switching its own operating channel (the subchannel used possibly being completely different from the subchannel originally used by the STA); or performing reception only on a secondary channel (performing transmission still on the original uplink operating channel without adjustment).

The value corresponding to each method should be unique. For example, 0 represents no adjustment, 1 represents reducing its own channel bandwidth, 2 represents performing transmission and reception only on a secondary channel, 3 represents switching its own operating channel, 4 represents performing reception only on a secondary channel, and 5 to 7 are reserved.

A Target Operating Channel Bitmap field is used to indicate an operating channel after the adjustment. Each bit represents one 20 MHz subchannel. For example, the 1^{st} bit represents a primary 20 MHz subchannel, the 2^{nd} bit represents a secondary 20 MHz subchannel in a primary 40 MHz, the 3^{rd} bit represents a low frequency 20 MHz subchannel in a secondary 40 MHz in a primary 80 MHz, the 4^{th} bit represents a high frequency 20 MHz subchannel in the secondary 40 MHz in the primary 80 MHz, and so on, with the 16^{th} bit representing the highest frequency 20 MHz subchannel in secondary 160 MHz in 320 MHz. For another example, sorting may be performed based on the magnitude of the center frequency of each subchannel, and a primary 20 MHz subchannel may be at any position within the 16 bits. A bit value of 1 indicates operating on a corresponding subchannel, and a bit value of 0 indicates not operating on a corresponding subchannel. Alternatively, a bit value of 0 indicates operating on a corresponding subchannel, and a bit value of 1 indicates not operating on a corresponding subchannel.

A Start-of-Switching Time field is used to indicate the time at which the STA itself starts to adjust the operating channel. It may be a partial timing synchronization function timer of a start time of operating channel adjustment, or an offset value between the start time of operating channel adjustment and the current time.

A Completion-of-Switching Time field is used to indicate the time at which the STA expects to complete the adjustment of the operating channel in microseconds. It may be a partial timing synchronization function timer of a completion time of operating channel adjustment, or an offset value between the completion time of start of operating channel and the current time.

A Switching Delay field indication is used for a difference value, in microseconds, between the time at which the STA expects to complete the adjustment of the operating channel and the start time of operating channel adjustment.

In the above embodiments, the third information is carried in at least one of following information: an RTS frame, a BA frame, an ACK frame, A-Control of a data frame, A-Control of a management frame, an A-Control field of an additional QoS Null frame, an additional management frame, MU-RTS, a basic trigger frame, or CTS.

Several possible signaling design methods are illustrated hereinafter.

### 3.4 MU-RTS trigger frame

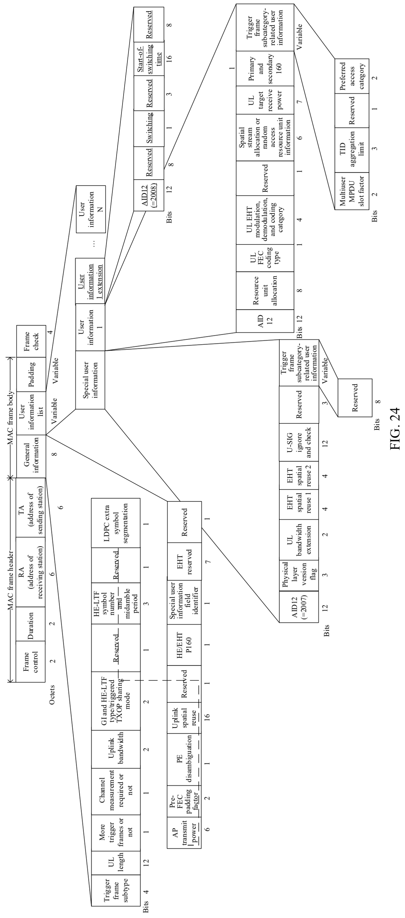

Exemplarily, referring to FIG. 24, taking a HE MU-RTS frame as an example, a Switching field and/or a Start-of-Switching Time field may be added to a User Information field in the MU-RTS frame. A similar indication may also be made in an EHT MU-RTS frame.

The Switching field is used to instruct an STA indicated by the User Information field (specifically, an STA indicated by the Associated Identifier field) to switch the channel, with a target channel thereof including a subchannel on which a resource unit indicated by a Resource Unit Allocation field is located. In some embodiments, a value of 0 represents no switching, and a value of 1 represents switching. In some embodiments, a value of 1 represents no switching, and a value of 0 represents switching.

The Start-of-Switching Time field is used to indicate the time at which the STA indicated by the User Information field starts to adjust the operating channel. It may be a partial timing synchronization function timer of a start time of operating channel adjustment, or an offset value between the start time of operating channel adjustment and the current time.

As described above, the switching delay of the STA is known. Therefore, the completion-of-switching time may be determined based on the start-of-switching time, and the start-of-switching time may be determined based on the completion-of-switching time. As a result, the Start-of-Switching Time field may be replaced with the Completion-of-Switching Time field.

### 3.5 Basic trigger frame

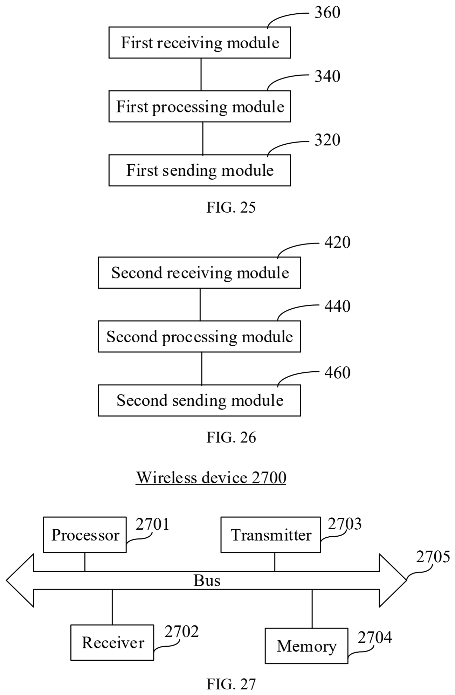

Exemplarily, referring to FIG. 25, taking an EHT Basic Trigger frame as an example, one User Information Extension field (with the AID12 field value thereof as the currently reserved value, for example, 2008) may be added after a User Information field corresponding to a STA that needs to switch, and a Switching field and/or a Start-of-Switching Time field is carried therein. A similar indication may also be made in a HE Basic Trigger frame.

The Switching field is used to instruct an STA indicated by the previous User Information field (specifically, an STA indicated by the Associated Identifier field) to switch the channel, with a target channel thereof including a subchannel on which a resource unit indicated by a Resource Unit Allocation field in the previous User Information field is located. 0 represents no switching, and 1 represents switching.

The Start-of-Switching Time field is used to indicate the time at which the STA indicated by the previous User Information field starts to adjust the operating channel. It may be a partial timing synchronization function timer of a start time of operating channel adjustment, or an offset value between the start time of operating channel adjustment and the current time.

As described above, the switching delay of the STA is known. Therefore, the completion-of-switching time may be determined based on the start-of-switching time, and the start-of-switching time may be determined based on the completion-of-switching time. As a result, the Start-of-Switching Time field may be replaced with the Completion-of-Switching Time field.

It should be noted that the structural designs of the above frames are only exemplary. In different embodiments, fields in the above frames are capable of being increased or decreased, the hierarchical relationship between the fields in the above frames is capable of being changed, a field sequence in the above frames is capable of being changed, a field length in the above frames is capable of being changed, and a field value or the meaning of the field value in the above frames is capable of being changed, which will not be elaborated herein any further.

FIG. 25 illustrates a structural block diagram of an apparatus for transmitting information according to some exemplary embodiments of the present disclosure. The apparatus includes at least part of a first sending module 320, a first processing module 340, and a first receiving module 360.

**The first sending module 320** is configured to send the first information and/or the second information of an STA in uplink transmission.

The operating channel of the STA includes at least one subchannel, wherein the at least one subchannel includes one primary channel and at least zero secondary channel. The primary channel and the secondary channel have the same or different bandwidths. In a case where at least two secondary channels are present, the bandwidths of the secondary channels are the same or different.

The first information is used to indicate interference to the STA, and the first information may also be referred to as interference information. The second information is used to indicate the adjustment of the operating channel by the STA in the case of interference, and the second information may also be referred to as operating channel information, operating channel adjustment information, or operating channel switching information.

In some embodiments, the interference refers to OBSS interference or intra-device interference. In some embodiments, the OBSS interference is consistent OBSS interference for both the STA and the AP, or inconsistent OBSS interference for the STA and the AP. In the embodiments of the present disclosure, an example in which the OBSS interference is inconsistent OBSS interference for the STA and the AP is used for description.

**With respect to the first information:**
The first information is used to indicate interference to the STA. The interference is the interference that the STA is currently experiencing, or the interference that the STA expects to experience.

In some embodiments, the first information includes at least one of following information: an interference source, periodic interference or aperiodic interference, an expected duration of the interference, an expected start time of the interference, an expected end time of the interference, or an interfered subchannel.

The interference source includes at least one of: OBSS interference, intra-device interference, or interference of an unknown type. The periodic interference refers to interference that periodically occurs in a period of time, and the aperiodic interference refers to interference that does not follow a periodic pattern. The expected duration of the interference is the duration that the STA expects the interference to last, and an deviation may be present between the expected duration and the actual duration of the interference. The expected start time of the interference is the time at which the STA expects the interference to start, and an deviation may be present between the expected start time and the actual start time of the interference. The expected end time of the interference is the time at which the STA expects the interference to end. The interfered subchannel is a subchannel being interfered with.

In some embodiments, the first information is carried in at least one of following information: an RTS frame, a BA frame, an ACK frame, A-Control of a data frame, A-Control of a management frame, an A-Control field of an additional QoS Null frame, or an additional management frame.

In some embodiments, the first information is carried in any one of the above information. In some embodiments, the first information is split into at least two pieces of sub-information. Each piece of sub-information is carried in any one of the above information, and the first information is carried in a plurality of pieces of information of the same type or different types.

In some embodiments, the first information is carried in: a Block Acknowledgment Control field of the BA frame, or control information of an A-Control field of the data frame or the management frame, or an Action field of the management frame.

**With respect to the second information:**
The second information is used to indicate the adjustment of the operating channel by the STA in the case of interference. The adjustment is used to adjust the operating channel of the STA to an interference-free subchannel for operation. In some embodiments, the second information is used to indicate adjustments that the STA has performed, will perform, or is expected to perform.

In some embodiments, the second information is used to indicate the adjustment of the operating channel by the STA in the case of OBSS interference, for example, the adjustment of the operating channel by the STA in the case of inconsistent OBSS interference. In some embodiments, the second information is used to indicate the adjustment of the operating channel by the STA in the case of intra-device interference.

In some embodiments, the second information is used to indicate the adjustment of the operating channel before the interference occurs or during the interference. In some embodiments, the second information is used to indicate the adjustment (or restoration) of the operating channel after the interference ends.

In some embodiments, the second information is used to indicate the adjustment of the operating channel before the interference occurs or during the interference. The second information includes at least one of following information: reducing the operating bandwidth of the STA; performing transmission and reception only on a primary channel, or performing reception only on a primary channel; performing transmission and reception only on at least one secondary channel, or performing reception only on at least one secondary channel; whether to switch the operating channel; a target operating channel after switching; a switching start time; a switching completion time; or a switching delay.

Reducing the operating bandwidth of the STA means reducing the number of subchannels in the operating channel of the STA, for example, reducing from two subchannels to one subchannel. Performing transmission and reception only on the primary channel refers to no longer using the secondary channel for transmission and reception. Performing reception only on the primary channel refers to no longer using the secondary channel for reception in the downlink reception process. Performing transmission and reception only on at least one secondary channel refers to no longer using the remaining subchannels including the primary channel for transmission and reception. Performing reception only on at least one secondary channel refers to no longer using the remaining subchannels including the primary channel for reception in the downlink reception process. Whether to switch the operating channel indicates switching the operating channel or not switching the operating channel. The target operating channel after the switching refers to the subchannels that constitute the operating channel after the switching in the case of switching the operating channel. The switching start time is the time at which the STA expects to start switching the operating channel. The switching completion time is the time at which the STA expects to finish switching the operating channel. The switching delay is a difference value between the switching completion time and the switching start time expected by the STA.

In some embodiments, the second information is used to indicate the adjustment of the operating channel after the interference occurs. The second information includes at least one of following information: restoring or increasing the operating bandwidth of the STA, restoring to an operating bandwidth before the interference, whether to switch the operating channel, a target operating channel after the switching, a switching start time, a switching completion time, or a switching delay.

In a case where the switching delay is not greater than a first duration, the second information does not need to indicate at least one of the switching delay, the switching completion time, or the switching delay. For example, the second information indicates only the switching start time, or the second information does not need to indicate the switching delay, the switching completion time, and the switching delay.

In a case where the switching delay is greater than the first duration, the second information carries at least two of the switching delay, the switching completion time, and the switching delay. For example, the second information carries the switching completion time and the switching delay; or the second time carries the switching start time and the switching delay; or the second time carries the switching start time and the switching completion time; or the second time carries the switching start time, the switching completion time, and the switching delay. Exemplarily, the first duration is an SIFS.

In some embodiments, the second information is carried in at least one of following information: an RTS frame, a BA frame, an ACK frame, A-Control of a data frame, A-Control of a management frame, an A-Control field of an additional QoS Null frame, or an additional management frame.

In some embodiments, the second information is carried in any one of the above information. In some embodiments, the second information is split into at least two pieces of sub-information. Each piece of sub-information is carried in any one of the above information, and the second information is carried in a plurality of pieces of information of the same type or different types.

In some embodiments, the second information is carried in at least one of following frames: a Block Acknowledgment Control field of the BA frame, or control information of an A-Control field of the data frame or the management frame, or an Action field of the management frame.

**The first processing module 340** is configured to adjust to operate on an interference-free subchannel.

In some embodiments, the first processing module 340 is configured to adjust to operate on an interference-free subchannel before the interference starts, or upon the onset of the interference, or upon detection of the interference.

In some embodiments, the operating channel before the adjustment is defined as a current operating channel, and the operating channel after the adjustment is defined as a target operating channel. The target operating channel includes any one of following cases:
**Case 1:** all interference-free subchannels in the current operating channel.
   The interference-free subchannels are subchannels other than the interfered subchannel in the current operating channel.
**Case 2:** a part of interference-free subchannels in the current operating channel.
   In some embodiments, the interference-free subchannels are at least two groups of non-contiguous subchannels, and the target operating channel refers to a group with the largest number of contiguous subchannels in the at least two groups of subchannels. In some embodiments, the interference-free subchannels are at least two groups of non-contiguous subchannels, and the target operating channel refers to one non-contiguous subchannel. In some embodiments, the interference-free subchannel includes a primary channel and at least one secondary channel, and the target operating channel is the primary channel. In some embodiments, the interference-free subchannel includes a primary channel and at least one secondary channel, and the target operating channel is the primary channel and a secondary channel contiguous to the primary channel.
**Case 3:** another interference-free subchannel not belonging to the current operating channel.
   For example, in a case where the entire current operating channel experiences interference, the target operating channel may be one or more subchannels that are completely different from the current operating channel.
**Case 4:** a first interference-free subchannel belonging to the current operating channel and a second interference-free subchannel not belonging to the current operating channel.

For example, in a case where a plurality of subchannels in the current operating channel experience interference, and the STA needs to operate on at least two contiguous subchannels, the target operating channel includes the first interference-free subchannel belonging to the current operating channel and the second interference-free subchannel not belonging to the current operating channel.

In the embodiments of the present disclosure, a plurality of ways to select a part of interference-free subchannels may be present, which will not be listed exhaustively.

In some embodiments, the current operating channel includes an uplink operating channel and a downlink operating channel. The adjustment range of the above adjustment includes any one of following three ranges.

**Range 1:** The uplink operating channel and the downlink operating channel are adjusted simultaneously.

In some embodiments, the uplink operating channel and the downlink operating channel are adjusted identically, but the possibility that the uplink operating channel and the downlink operating channel are adjusted differently in some embodiments is not excluded.

**Range 2:** The uplink operating channel is kept unchanged, and the downlink operating channel is adjusted.

In some embodiments, the STA experiences the intra-device interference. In this case, the uplink transmission of the STA is not affected, and only the downlink transmission is affected. Therefore, the uplink operating channel is kept unchanged, and only the downlink operating channel is adjusted.

**Range 3:** The downlink operating channel is kept unchanged, and the uplink operating channel is adjusted.

In some embodiments, in a case where the transmission of the downlink operating channel of the STA is not affected, for example, periodic downlink transmission is performed outside the interference time, the STA can keep the downlink operating channel unchanged and adjust only the uplink operating channel.

In the embodiments of the present disclosure, an example in which the uplink operating channel and the downlink operating channel are adjusted simultaneously, or only the downlink operating channel is adjusted while the uplink operating channel is kept unchanged is used for description.

In some embodiments, the adjustment method of the first processing module 340 includes at least one of following methods.

**Adjustment method 1:** In a case where the secondary channel experiences interference and the primary channel is interference-free, the channel bandwidth of the STA is reduced to perform transmission and reception on the primary channel.

**Adjustment method 2:** In a case where the secondary channel experiences interference and at least two contiguous subchannels including the primary channel are interference-free, the channel bandwidth of the STA is reduced to perform transmission and reception on the at least two contiguous subchannels.

**Adjustment method 3:** In a case where at least one subchannel including the primary channel experiences interference and at least one secondary channel is interference-free, the channel bandwidth of the STA is reduced to perform transmission and reception on the interference-free secondary channel.

**Adjustment method 4:** In a case where a switching condition is met, a target operating channel different from the current operating channel is switched to for transmission and reception.

**Adjustment method 5:** In a case where the interference type is intra-device interference, the uplink channel bandwidth of the STA is kept unchanged, and the downlink channel bandwidth of the STA is reduced to perform reception on an interference-free subchannel.

**Adjustment method 6:** In a case where the interference type is intra-device interference and a switching condition is met, the uplink channel bandwidth of the STA is kept unchanged, and a target operating channel different from the current downlink channel is switched to for reception.

In some embodiments, in the above adjustment method 4 and/or adjustment method 6, the switching condition includes at least one of following conditions: at least one subchannel including a primary channel experiences interference, an interference-free subchannel is a non-contiguous subchannel, or an entire operating channel bandwidth of the current operating channel experiences interference.

In some embodiments, as long as at least one subchannel including the primary channel experiences interference, it is considered that the switching condition is met. In some embodiments, the STA needs to operate on contiguous subchannels, and in the case where the interference-free subchannel is a non-contiguous subchannel, it is considered that the switching condition is met. In some embodiments, the STA needs to operate on n contiguous subchannels, and in a case where the number of contiguous subchannels in the interference-free subchannel is less than n, it is considered that the switching condition is met. In some embodiments, in the case where the entire operating channel bandwidth of the current operating channel experiences interference, it is considered that the switching condition is met.

In some embodiments, the STA first sends the second information, and then adjusts to an interference-free subchannel for reception and/or transmission. In some embodiments, the STA first adjusts to an interference-free subchannel for reception and/or transmission, and then sends the second information. In some embodiments, the STA simultaneously sends the second information and adjusts to an interference-free subchannel for reception and/or transmission.

In some embodiments, in a case where the interference ends, the operating channel is adjusted to a state as the start of a first TXOP; alternatively, in acase where the first TXOP ends, the operating channel is adjusted to a state as the start of the first TXOP, wherein the first TXOP is a TXOP used by the STA. Prior to adjusting the operating channel to the state as the start of the first TXOP, the STA may resend the second information to explicitly indicate the restoration of the adjustment this time. Alternatively, the STA may not resend the second information and restore the adjustment implicitly based on the agreed method.

**The first receiving module 360** is configured to receive third information in downlink transmission, wherein the third information is used to indicate the adjustment of the operating channel of the STA by the AP.

Subsequent to receiving the first information and/or the second information, the AP sends the third information to the STA in downlink transmission. The third information is used to indicate the adjustment of the operating channel of the STA by the AP. The STA receives the third information from the AP in downlink transmission.

In some embodiments, in a case where the AP receives the second information reported by the STA and does not agree with the adjustment of the operating channel by the STA, the AP sends the third information to the STA, wherein the adjustment method of the third information is different from that of the second information. In a case where the AP receives the second information reported by the STA and agrees with the adjustment of the operating channel by the STA, the AP does not need to send the third information.

In some embodiments, in a case where the AP receives the second information reported by the STA and does not agree with the adjustment of the operating channel by the STA, the AP sends the third information to the STA, wherein the adjustment method of the third information is different from that of the second information. In a case where the AP receives the second information reported by the STA and agrees with the adjustment of the operating channel by the STA, the AP sends the third information to the STA, wherein the adjustment method of the third information is the same as that of the second information.

In some embodiments, the AP instructs the STA to adjust to operate on an interference-free subchannel in a case where a sending condition is met. The sending condition includes at least one of: before the interference starts, upon the onset of the interference, upon receiving the first information, upon receiving the second information, or upon the end of the interference.

In some embodiments, similar to the previous embodiment, the operating channel before the adjustment is defined as the current operating channel, and the operating channel after the adjustment is defined as the target operating channel. The target operating channel includes any one of following cases:
**Case 1:** all interference-free subchannels in the current operating channel.
**Case 2:** a part of interference-free subchannels in the current operating channel.
**Case 3:** another interference-free subchannel not belonging to the current operating channel.
**Case 4:** a first interference-free subchannel belonging to the current operating channel and a second interference-free subchannel not belonging to the current operating channel.

In the embodiments of the present disclosure, a plurality of ways to select a part of interference-free subchannels may be present, which will not be listed exhaustively.

In some embodiments, the current operating channel includes an uplink operating channel and a downlink operating channel. The adjustment range of the above adjustment includes any one of following three ranges.

**Range 1:** The uplink operating channel and the downlink operating channel are adjusted simultaneously.

In some embodiments, the uplink operating channel and the downlink operating channel are adjusted identically, but the possibility that the uplink operating channel and the downlink operating channel are adjusted differently in some embodiments is not excluded.

**Range 2:** The uplink operating channel is kept unchanged, and the downlink operating channel is adjusted.

In some embodiments, the STA experiences the intra-device interference. In this case, the uplink transmission of the STA is not affected, and only the downlink transmission is affected. Therefore, the uplink operating channel is kept unchanged, and only the downlink operating channel is adjusted.

**Range 3:** The downlink operating channel is kept unchanged, and the uplink operating channel is adjusted.

In some embodiments, in a case where the transmission of the downlink operating channel of the STA is not affected, for example, periodic downlink transmission is performed outside the interference time, the STA may keep the downlink operating channel unchanged and adjust only the uplink operating channel.

In some embodiments, the adjustment method indicated by the third information is determined based on the first information. The adjustment method indicated by the third information includes at least one of following adjustment methods.

**Adjustment method 1:** In a case where the secondary channel experiences interference and the primary channel is interference-free, the third information instructs the STA to reduce the channel bandwidth of the operating channel to perform the transmission and reception on the primary channel.

**Adjustment method 2:** In a case where the secondary channel experiences interference and at least two contiguous subchannels including the primary channel are interference-free, the third information instructs the STA to reduce the channel bandwidth of the operating channel to perform transmission and reception on the at least two contiguous subchannels.

**Adjustment method 3:** In a case where at least one subchannel including the primary channel experiences interference and at least one secondary channel is interference-free, the third information instructs the STA to reduce the channel bandwidth of the operating channel to perform transmission and reception on the interference-free secondary channel.

**Adjustment method 4:** In a case where a switching condition is met, the third information instructs the STA to switch to a target operating channel different from the current operating channel for transmission and reception.

**Adjustment method 5:** In a case where the interference type is intra-device interference, the third information instructs the STA to keep the uplink channel bandwidth unchanged and reduce the downlink channel bandwidth to perform reception on an interference-free subchannel.

**Adjustment method 6:** In a case where the interference type is intra-device interference and a switching condition is met, the third information instructs the STA to keep the uplink channel bandwidth unchanged and switch to a target operating channel different from the current downlink channel for reception.

In some embodiments, in the above adjustment method 4 and/or adjustment method 6, the switching condition includes at least one of following conditions: at least one subchannel including a primary channel experiences interference, an interference-free subchannel is a non-contiguous subchannel, or the entire operating channel bandwidth of the current operating channel experiences interference.

In some embodiments, as long as at least one subchannel including the primary channel experiences interference, it is considered that the switching condition is met. In some embodiments, the STA needs to operate on contiguous subchannels, and in the case where the interference-free subchannel is a non-contiguous subchannel, it is considered that the switching condition is met. In some embodiments, the STA needs to operate on n contiguous subchannels, and in the case where the number of contiguous subchannels in the interference-free subchannel is less than n, it is considered that the switching condition is met. In some embodiments, in the case where the entire operating channel bandwidth of the current operating channel experiences interference, it is considered that the switching condition is met.

In some embodiments, the STA first sends the second information, and, subsequent to receiving the third information, adjusts to an interference-free subchannel for reception and/or transmission based on the indication of the third information. In some embodiments, the STA first adjusts, based on the first information and/or the second information, to an interference-free subchannel for reception and/or transmission, and in the case of receiving the third information, then readjusts, based on the indication of the third information, to an interference-free subchannel for reception and/or transmission.

In some embodiments, the third information is used to indicate at least one of following information: whether the STA is required to switch the operating channel, indicating a target operating channel for the STA to switch to, a switching start time, a switching completion time, or a switching delay.

In some embodiments, the third information is carried in at least one of following frames: an RTS frame, a BA frame, an ACK frame, an A-Control of a data frame, A-Control of a management frame, an A-Control field of an additional QoS Null frame, an additional management frame, MU-RTS, a basic trigger frame; or CTS.

In some embodiments, the User Information field of the MU-RTS includes at least one of: an Associated Identifier field, used to indicate the STA; a Switching field, used to indicate whether the STA indicated by the Associated Identifier field adjusts the operating channel; or a Start-of-Switching Time field, used to indicate the time at which the STA indicated by the Associated Identifier field starts to adjust the operating channel.

In some embodiments, the user information list of the basic trigger frame includes a User Information field and a User Information Extension field that appear in pairs.

The User Information field is used to indicate the STA and allocate a resource unit to the STA; and the User Information Extension field includes a Switching field and/or a Start-of-Switching field.

The Switching field is used to indicate whether the STA adjusts the operating channel, wherein in the case where the STA adjusts the operating channel, a target operating channel is a subchannel on which the resource unit allocated to the STA is located; and the Start-of-Switching Time field is used to indicate the time at which the STA starts to adjust the operating channel.

The first sending module 320 may be independently implemented as one embodiment, or the first sending module 320 and the first processing module 340 may be combined and implemented as one embodiment; or the first sending module 320 and the first receiving module 360 may be combined and implemented as one embodiment; or the first sending module 320, the first processing module 340, and the first receiving module 360 may be combined and implemented as one embodiment, which is not limited herein.

In summary, in the apparatus according to the embodiments, the first information and/or the second information of the STA is sent in the uplink transmission, wherein the first information is used to indicate the interference to the STA, and the second information is used to indicate the adjustment of at least one operating channel by the STA, such that the STA is capable of actively reporting the interference information, or actively adjusting the operating channel in the case of interference, and actively reporting the adjustment information of the operating channel to the AP. Since the method performs reporting or adjustment at the STA granularity, the method is applicable to scenarios involving inconsistent OBSS interference or non-OBSS interference.

In an OBSS interference scenario, in the case where the STA experiences the OBSS interference and the AP does not receive the OBSS interference, the STA actively reports the first information and/or the second information, such that the AP can be triggered to perform or coordinate subsequent operating channel adjustments.

In a non-OBSS interference scenario, in the case where the STA experiences the intra-device interference, the STA actively reports the first information and/or the second information, such that the AP can be triggered to perform or coordinate subsequent operating channel adjustments.

FIG. 26 illustrates a structural block diagram of an apparatus for transmitting information according to some exemplary embodiments of the present disclosure. The apparatus includes at least part of a second receiving module 420, a second processing module 440, and a second sending module 460.

**The second receiving module 420** is configured to receive first information and/or second information in uplink transmission.

The operating channel of the STA includes at least one subchannel, wherein the at least one subchannel includes one primary channel and at least zero secondary channel. The primary channel and the secondary channel have the same or different bandwidths. In a case where at least two secondary channels are present, the bandwidths of the secondary channels are the same or different.

The first information is used to indicate interference to the STA, and the first information may also be referred to as interference information. The second information is used to indicate the adjustment of the operating channel by the STA in the case of interference, and the second information may also be referred to as operating channel information, operating channel adjustment information, or operating channel switching information.

In some embodiments, the interference refers to OBSS interference or intra-device interference. In some embodiments, the OBSS interference is consistent OBSS interference for both the STA and the AP, or inconsistent OBSS interference for the STA and the AP. In the embodiments of the present disclosure, an example in which the OBSS interference is inconsistent OBSS interference for the STA and the AP is used for description.

**With respect to the first information:**
The first information is used to indicate interference to the STA. The interference is the interference that the STA is currently experiencing, or the interference that the STA expects to experience.

In some embodiments, the first information includes at least one of following information: an interference source, periodic interference or aperiodic interference, an expected duration of the interference, an expected start time of the interference, an expected end time of the interference, or an interfered subchannel.

The interference source includes at least one of: OBSS interference, intra-device interference, or interference of an unknown type. The periodic interference refers to interference that periodically occurs in a period of time, and the aperiodic interference refers to interference that does not follow a periodic pattern. The expected duration of the interference is the duration that the STA expects the interference to last, and an deviation may be present between the expected duration and the actual duration of the interference. The expected start time of the interference is the time at which the STA expects the interference to start, and an deviation may be present between the expected start time and the actual start time of the interference. The expected end time of the interference is the time at which the STA expects the interference to end. The interfered subchannel is a subchannel being interfered with.

In some embodiments, the first information is carried in at least one of following information: an RTS frame, a BA frame, an ACK frame, A-Control of a data frame, A-Control of a management frame, an A-Control field of an additional QoS Null frame, or an additional management frame.

In some embodiments, the first information is carried in any one of the above information. In some embodiments, the first information is split into at least two pieces of sub-information. Each piece of sub-information is carried in any one of the above information, and the first information is carried in a plurality of pieces of information of the same type or different types.

In some embodiments, the first information is carried in: a Block Acknowledgment Control field of the BA frame, or control information of an A-Control field of the data frame or the management frame, or an Action field of the management frame.

**With respect to the second information:**
The second information is used to indicate the adjustment of the operating channel by the STA in the case of interference. The adjustment is used to adjust the operating channel of the STA to an interference-free subchannel for operation. In some embodiments, the second information is used to indicate adjustments that the STA has performed, will perform, or is expected to perform.

In some embodiments, the second information is used to indicate the adjustment of the operating channel by the STA in the case of OBSS interference, for example, the adjustment of the operating channel by the STA in the case of inconsistent OBSS interference. In some embodiments, the second information is used to indicate the adjustment of the operating channel by the STA in the case of intra-device interference.

In some embodiments, the second information is used to indicate the adjustment of the operating channel before the interference occurs or during the interference. In some embodiments, the second information is used to indicate the adjustment (or restoration) of the operating channel after the interference occurs.

In some embodiments, the second information is used to indicate the adjustment of the operating channel before the interference occurs or during the interference. The second information includes at least one of following information: reducing the operating bandwidth of the STA; performing transmission and reception only on a primary channel, or performing reception only on a primary channel; performing transmission and reception only on at least one secondary channel, or performing reception only on at least one secondary channel; whether to switch the operating channel; a target operating channel after switching; a switching start time; a switching completion time; or a switching delay.

Reducing the operating bandwidth of the STA means reducing the number of subchannels in the operating channel of the STA, for example, reducing from two subchannels to one subchannel. Performing transmission and reception only on the primary channel refers to no longer using the secondary channel for transmission and reception. Performing reception only on the primary channel refers to no longer using the secondary channel for reception in the downlink reception process. Performing transmission and reception only on at least one secondary channel refers to no longer using the remaining subchannels including the primary channel for transmission and reception. Performing reception only on at least one secondary channel refers to no longer using the remaining subchannels including the primary channel for reception in the downlink reception process. Whether to switch the operating channel indicates switching the operating channel or not switching the operating channel. The target operating channel after the switching refers to the subchannels that constitute the operating channel after the switching in the case of switching the operating channel. The switching start time is the time at which the STA expects to start switching the operating channel. The switching completion time is the time at which the STA expects to finish switching the operating channel. The switching delay is a difference value between the switching completion time and the switching start time expected by the STA.

In some embodiments, the second information is used to indicate the adjustment of the operating channel after the interference occurs. The second information includes at least one of following information: restoring or increasing the operating bandwidth of the STA, restoring to an operating bandwidth before the interference, whether to switch the operating channel, a target operating channel after switching, a switching start time, a switching completion time, or a switching delay.

In a case where the switching delay is not greater than a first duration, the second information does not need to indicate at least one of the switching delay, the switching completion time, or the switching delay. For example, the second information indicates only the switching start time, or the second information does not need to indicate the switching delay, the switching completion time, and the switching delay.

In a case where the switching delay is greater than the first duration, the second information carries at least two of the switching delay, the switching completion time, and the switching delay. For example, the second information carries the switching completion time and the switching delay; or the second time carries the switching start time and the switching delay; or the second time carries the switching start time and the switching completion time; or the second time carries the switching start time, the switching completion time, and the switching delay. Exemplarily, the first duration is an SIFS.

In some embodiments, the second information is carried in at least one of following information: an RTS frame, a BA frame, an ACK frame, A-Control of a data frame, A-Control of a management frame, an A-Control field of an additional QoS Null frame, or an additional management frame.

In some embodiments, the second information is carried in any one of the above information. In some embodiments, the second information is split into at least two pieces of sub-information. Each piece of sub-information is carried in any one of the above information, and the second information is carried in a plurality of pieces of information of the same type or different types.

In some embodiments, the second information is carried in at least one of following frames: a Block Acknowledgment Control field of the BA frame, or control information of an A-Control field of the data frame or the management frame, or an Action field of the management frame.

**The second processing module 440** is configured to schedule the transmission of the STA on an interference-free subchannel.

In some embodiments, after the first information is received, the second processing module 440 adjusts the uplink transmission and/or the downlink transmission related to the STA to a subchannel on which the STA is interference-free, wherein the adjustment method is specified in a protocol or predefined, the adjustment methods for the AP and the STA are the same, and the STA does not need to additionally send the second information. In some embodiments, after the second information is received, the uplink transmission and/or the downlink transmission related to the STA is adjusted to a subchannel on which the STA is interference-free, wherein the adjustment method is indicated or suggested by the second information, and the STA does not need to send the first information. In some embodiments, after the first information and the second information are received, the uplink transmission and/or the downlink transmission related to the STA is adjusted to a subchannel on which the STA is interference-free, wherein the adjustment method is indicated or suggested by the second information.

In some embodiments, the uplink transmission and/or the downlink transmission for the STA is adjusted to a subchannel on which the STA is interference-free before the interference to the STA starts, or upon the onset of the interference, or upon detection of the interference.

In some embodiments, the operating channel before the adjustment is defined as a current operating channel, and the operating channel after the adjustment is defined as a target operating channel. The target operating channel includes any one of following cases:
**Case 1:** all interference-free subchannels in the current operating channel.
   The interference-free subchannels are subchannels other than the interfered subchannel in the current operating channel.
**Case 2:** a part of interference-free subchannels in the current operating channel.
   In some embodiments, the interference-free subchannels are at least two groups of non-contiguous subchannels, and the target operating channel refers to a group with the largest number of contiguous subchannels in the at least two groups of subchannels. In some embodiments, the interference-free subchannels are at least two groups of non-contiguous subchannels, and the target operating channel refers to one non-contiguous subchannel. In some embodiments, the interference-free subchannel includes a primary channel and at least one secondary channel, and the target operating channel is the primary channel. In some embodiments, the interference-free subchannel includes a primary channel and at least one secondary channel, and the target operating channel is the primary channel and a secondary channel contiguous to the primary channel.
**Case 3:** another interference-free subchannel not belonging to the current operating channel.
   For example, in a case where the entire current operating channel experiences interference, the target operating channel may be one or more subchannels that are completely different from the current operating channel.
**Case 4:** a first interference-free subchannel belonging to the current operating channel and a second interference-free subchannel not belonging to the current operating channel.

For example, in a case where a plurality of subchannels in the current operating channel experience interference, and the STA needs to operate on at least two contiguous subchannels, the target operating channel includes the first interference-free subchannel belonging to the current operating channel and the second interference-free subchannel not belonging to the current operating channel.

In the embodiments of the present disclosure, a plurality of ways to select a part of interference-free subchannels may be present, which will not be listed exhaustively.

In some embodiments, the current operating channel includes an uplink operating channel and a downlink operating channel. The adjustment range of the above adjustment includes any one of following three ranges.

**Range 1:** The uplink operating channel and the downlink operating channel are adjusted simultaneously.

In some embodiments, the uplink operating channel and the downlink operating channel are adjusted identically, but the possibility that the uplink operating channel and the downlink operating channel are adjusted differently in some embodiments is not excluded.

**Range 2:** The uplink operating channel is kept unchanged, and the downlink operating channel is adjusted.

In some embodiments, the STA experiences the intra-device interference. In this case, the uplink transmission of the STA is not affected, and only the downlink transmission is affected. Therefore, the uplink operating channel is kept unchanged, and only the downlink operating channel is adjusted.

**Range 3:** The downlink operating channel is kept unchanged, and the uplink operating channel is adjusted.

In some embodiments, in a case where the transmission of the downlink operating channel of the STA is not affected, for example, periodic downlink transmission is performed outside the interference time, the STA also keeps the downlink operating channel unchanged and adjusts only the uplink operating channel.

In the embodiments of the present disclosure, an example in which the uplink operating channel and the downlink operating channel are adjusted simultaneously, or only the downlink operating channel is adjusted while the uplink operating channel is kept unchanged is used for description.

In some embodiments, the adjustment method of the second processing module 440 includes at least one of following methods.

**Adjustment method 1:** In a case where the secondary channel experiences interference and the primary channel is interference-free, the wireless transmission with the STA is scheduled to the primary channel for transmission and reception.

**Adjustment method 2:** In a case where the secondary channel experiences interference and at least two contiguous subchannels including the primary channel are interference-free, the wireless transmission with the STA is scheduled to the at least two contiguous subchannels for transmission and reception.

**Adjustment method 3:** In a case where at least one subchannel including the primary channel experiences interference and at least one secondary channel is interference-free, the wireless transmission with the STA is scheduled to the interference-free secondary channel for transmission and reception.

**Adjustment method 4:** In a case where a switching condition is met, the wireless transmission with the STA is scheduled to a target operating channel different from the current operating channel for transmission and reception.

**Adjustment method 5:** In a case where the interference type is intra-device interference, the uplink channel bandwidth of the STA is kept unchanged, and the downlink transmission with the STA is scheduled to an interference-free subchannel for reception.

**Adjustment method 6:** In a case where the interference type is intra-device interference and a switching condition is met, the uplink channel bandwidth of the STA is kept unchanged, and the downlink transmission with the STA is scheduled to a target operating channel different from the current downlink channel for reception.

In some embodiments, in the above adjustment method 4 and/or adjustment method 6, the switching condition includes at least one of following conditions: at least one subchannel including a primary channel experiences interference, an interference-free subchannel is a non-contiguous subchannel, or an entire operating channel bandwidth of the current operating channel experiences interference.

In some embodiments, as long as at least one subchannel including the primary channel experiences interference, it is considered that the switching condition is met. In some embodiments, the STA needs to operate on contiguous subchannels, and in the case where the interference-free subchannel is a non-contiguous subchannel, it is considered that the switching condition is met. In some embodiments, the STA needs to operate on n contiguous subchannels, and in the case where the number of contiguous subchannels in the interference-free subchannel is less than n, it is considered that the switching condition is met. In some embodiments, in the case where the entire operating channel bandwidth of the current operating channel experiences interference, it is considered that the switching condition is met.

In some embodiments, the second information is sent by the STA prior to being adjusted to the interference-free subchannel for reception and/or transmission. In some embodiments, the second information is sent by the STA subsequent to being adjusted to the interference-free subchannel for reception and/or transmission. In some embodiments, the second information is sent by the STA while being adjusted to the interference-free subchannel.

Since the same AP may provide services for a plurality of STAs, in some embodiments, the second processing module 440 is configured to maintain, in a case where a part of STAs in a first transmission period experience interference on a primary channel, transmission on the primary channel.

The first transmission period is a part of a first TXOP. The first TXOP is a TXOP corresponding to an STA that sends the first information and/or the second information.

That is, in the case where only a part or a small part of STAs experience interference on the primary channel, since a part of STAs are interference-free on the primary channel, the AP maintains transmission on the primary channel, thereby ensuring the transmission of the interference-free STAs on the primary channel.

In some embodiments, the second processing module 440 is configured to schedule, by the AP, in a case where all STAs in a first transmission period experience interference on a primary channel, the transmission of another STA in a second TXOP on the primary channel.

The first transmission period is a part of a first TXOP, wherein the first TXOP is a TXOP corresponding to an STA that sends the first information and/or the second information.

In some embodiments, the second processing module 440 is configured to suspend downlink transmission with the STA, wherein the number of suspensions is related to a switching delay or a switching completion time.

**The second sending module 460** is configured to send third information in downlink transmission, wherein the third information is used to indicate the adjustment of the operating channel of the STA by the AP.

Subsequent to receiving the first information and/or the second information, the AP sends the third information to the STA in downlink transmission. The third information is used to indicate the adjustment of the operating channel of the STA by the AP. The STA receives the third information from the AP in downlink transmission.

In some embodiments, in a case where the AP receives the second information reported by the STA and does not agree with the adjustment of the operating channel by the STA, the AP sends the third information to the STA, wherein the adjustment method of the third information is different from that of the second information. In a case where the AP receives the second information reported by the STA and agrees with the adjustment of the operating channel by the STA, the AP does not need to send the third information.

In some embodiments, in a case where the AP receives the second information reported by the STA and does not agree with the adjustment of the operating channel by the STA, the AP sends the third information to the STA, wherein the adjustment method of the third information is different from that of the second information. In a case where the AP receives the second information reported by the STA and agrees with the adjustment of the operating channel by the STA, the AP sends the third information to the STA, wherein the adjustment method of the third information is the same as that of the second information.

In some embodiments, the AP instructs the STA to adjust to operate on an interference-free subchannel in a case where a sending condition is met. The sending condition includes at least one of: before the interference starts, upon the onset of the interference, upon receiving the first information, upon receiving the second information, or upon the end of the interference.

In some embodiments, similar to the previous embodiment, the operating channel before the adjustment is defined as the current operating channel, and the operating channel after the adjustment is defined as the target operating channel. The target operating channel includes any one of following cases:
**Case 1:** all interference-free subchannels in the current operating channel.
**Case 2:** a part of interference-free subchannels in the current operating channel.
**Case 3:** another interference-free subchannel not belonging to the current operating channel.
**Case 4:** a first interference-free subchannel belonging to the current operating channel and a second interference-free subchannel not belonging to the current operating channel.

In the embodiments of the present disclosure, a plurality of ways to select a part of interference-free subchannels may be present, which will not be listed exhaustively.

In some embodiments, the current operating channel includes an uplink operating channel and a downlink operating channel. The adjustment range of the above adjustment includes any one of following three ranges.

**Range 1:** The uplink operating channel and the downlink operating channel are adjusted simultaneously.

In some embodiments, the uplink operating channel and the downlink operating channel are adjusted identically, but the possibility that the uplink operating channel and the downlink operating channel are adjusted differently in some embodiments is not excluded.

**Range 2:** The uplink operating channel is kept unchanged, and the downlink operating channel is adjusted.

In some embodiments, the STA experiences the intra-device interference. In this case, the uplink transmission of the STA is not affected, and only the downlink transmission is affected. Therefore, the uplink operating channel is kept unchanged, and only the downlink operating channel is adjusted.

**Range 3:** The downlink operating channel is kept unchanged, and the uplink operating channel is adjusted.

In some embodiments, in a case where the transmission of the downlink operating channel of the STA is not affected, for example, periodic downlink transmission is performed outside the interference time, the STA also keeps the downlink operating channel unchanged and adjusts only the uplink operating channel.

In some embodiments, the adjustment method indicated by the third information is determined based on the first information. The adjustment method indicated by the third information includes at least one of following adjustment methods.

**Adjustment method 1:** In a case where the secondary channel experiences interference and the primary channel is interference-free, the third information instructs the STA to reduce the channel bandwidth of the operating channel to perform the transmission and reception on the primary channel.

**Adjustment method 2:** In a case where the secondary channel experiences interference and at least two contiguous subchannels including the primary channel are interference-free, the third information instructs the STA to reduce the channel bandwidth of the operating channel to perform transmission and reception on the at least two contiguous subchannels.

**Adjustment method 3:** In a case where at least one subchannel including the primary channel experiences interference and at least one secondary channel is interference-free, the third information instructs the STA to reduce the channel bandwidth of the operating channel to perform transmission and reception on the interference-free secondary channel.

**Adjustment method 4:** In a case where a switching condition is met, the third information instructs the STA to switch to a target operating channel different from the current operating channel for transmission and reception.

**Adjustment method 5:** In a case where the interference type is intra-device interference, the third information instructs the STA to keep the uplink channel bandwidth unchanged and reduce the downlink channel bandwidth to perform reception on an interference-free subchannel.

**Adjustment method 6:** In a case where the interference type is intra-device interference and a switching condition is met, the third information instructs the STA to keep the uplink channel bandwidth unchanged and switch to a target operating channel different from the current downlink channel for reception.

In some embodiments, in the above adjustment method 4 and/or adjustment method 6, the switching condition includes at least one of following conditions: at least one subchannel including a primary channel experiences interference, an interference-free subchannel is a non-contiguous subchannel, or the entire operating channel bandwidth of the current operating channel experiences interference.

In some embodiments, as long as at least one subchannel including the primary channel experiences interference, it is considered that the switching condition is met. In some embodiments, the STA needs to operate on contiguous subchannels, and in the case where the interference-free subchannel is a non-contiguous subchannel, it is considered that the switching condition is met. In some embodiments, the STA needs to operate on n contiguous subchannels, and in the case where the number of contiguous subchannels in the interference-free subchannel is less than n, it is considered that the switching condition is met. In some embodiments, in the case where the entire operating channel bandwidth of the current operating channel experiences interference, it is considered that the switching condition is met.

In some embodiments, the STA first sends the second information, and, subsequent to receiving the third information, adjusts to an interference-free subchannel for reception and/or transmission based on the indication of the third information. In some embodiments, the STA first adjusts, based on the first information and/or the second information, to an interference-free subchannel for reception and/or transmission, and in the case of receiving the third information, then readjusts, based on the indication of the third information, to an interference-free subchannel for reception and/or transmission.

In some embodiments, the third information is used to indicate at least one of following information: whether the STA is required to switch the operating channel, indicating a target operating channel for the STA to switch to, a switching start time, a switching completion time, or a switching delay.

In some embodiments, the third information is carried in at least one of following frames: an RTS frame, a BA frame, an ACK frame, A-Control of a data frame, A-Control of a management frame, an A-Control field of an additional QoS Null frame, an additional management frame, MU-RTS, a basic trigger frame, or CTS.

In some embodiments, the User Information field of the MU-RTS includes at least one of: an Associated Identifier field, used to indicate the STA; a Switching field, used to indicate whether the STA indicated by the Associated Identifier field adjusts the operating channel; or a Start-of-Switching Time field, used to indicate the time at which the STA indicated by the Associated Identifier field starts to adjust the operating channel.

In some embodiments, the user information list of the basic trigger frame includes a User Information field and a User Information Extension field that appear in pairs.

The User Information field is used to indicate the STA and allocate a resource unit to the STA; and the User Information Extension field includes a Switching field and/or a Start-of-Switching field.

The Switching field is used to indicate whether the STA adjusts the operating channel, wherein in a case where the STA adjusts the operating channel, a target operating channel is a subchannel on which the resource unit allocated to the STA is located; and the Start-of-Switching Time field is used to indicate the time at which the STA starts to adjust the operating channel.

In some embodiments, the second sending module 460 is configured to send, in a case where all STAs in the first transmission period experience interference on the primary channel, a PPDU used to occupy a channel on the primary channel. The PPDU is used to ensure that a first TXOP is not preempted by another STA or AP.

The first transmission period is a part of a first TXOP, wherein the first TXOP is a TXOP corresponding to an STA that sends the first information and/or the second information.

In some embodiments, the second sending module 460 is configured to send a downlink trigger frame on an interference-free subchannel over a Non-HT duplicate PPDU.

In some embodiments, the second sending module 460 is configured to send, in a case where one STA is present in a first TXOP, subsequent to waiting for an idle duration of a target operating channel indicated by the second information to reach a second duration, a PPDU used to occupy a channel on the target operating channel.

The first TXOP is a TXOP corresponding to an STA that sends the second information. Exemplarily, the second duration is a PIFS.

In some embodiments, the PPDU used to occupy the channel includes: a preamble, or a payload, or a preamble and a payload, or a DATA field carrying a CTS frame, or a DATA field carrying a QoS Null frame.

In some embodiments, a value in a Duration field of the PPDU is determined based on the switching completion time.

In some embodiments, the second processing module 440 is configured for the AP to switch the primary channel. Switching the primary channel includes at least one of: switching the primary channel in all current subchannels, or switching the primary channel in all current subchannels and reducing the operating channel bandwidth of the AP.

In some embodiments, a holder of the first TXOP used by the STA is an AP.

In some embodiments, a holder of the first TXOP used by the STA is an STA, and the second sending module 460 is configured to send a BA/ACK frame on a target operating channel indicated by the STA, wherein the BA/ACK frame is transmitted over a MU PPDU or a Non-HT duplicate PPDU.

In some embodiments, in a case where the interference ends, the second sending module 460 sends the third information to instruct the STA to adjust the operating channel to a state as the start of a first TXOP; alternatively, in a case where the first TXOP ends, the second sending module 460 sends the third information to instruct the STA to adjust the operating channel to a state as the start of the first TXOP, wherein the first TXOP is a TXOP used by the STA.

The second receiving module 420 may be independently implemented as one embodiment, or the second receiving module 420 and the second processing module 440 may be combined and implemented as one embodiment; or the second receiving module 420 and the second sending module 460 may be combined and implemented as one embodiment; or the second receiving module 420, the second processing module 440, and the second sending module 460 may be combined and implemented as one embodiment, which is not limited herein.

In summary, in the apparatus according to the embodiments, the first information and/or the second information of the STA is combined-searched in the uplink transmission, wherein the first information is used to indicate the interference to the STA, and the second information is used to indicate the adjustment of at least one operating channel by the STA, such that the STA is capable of actively reporting the interference information, or actively adjusting the operating channel in the case of interference, and actively reporting the adjustment information of the operating channel to the AP. Since the method performs reporting or adjustment at the STA granularity, the method is applicable to scenarios involving inconsistent OBSS interference or non-OBSS interference.

In an OBSS interference scenario, in a case where the STA experiences the OBSS interference and the AP does not receive the OBSS interference, the STA actively reports the first information and/or the second information, such that the AP can be triggered to perform or coordinate subsequent operating channel adjustments.

In a non-OBSS interference scenario, in the case where the STA experiences the intra-device interference, the STA actively reports the first information and/or the second information, such that the AP can be triggered to perform or coordinate subsequent operating channel adjustments.

It should be noted that the apparatus according to the above embodiments is illustrated merely by way of example based on the division of the functional modules mentioned above. In practice, these functions may be distributed among different functional modules as needed. That is, the device may be divided into various functional modules to accomplish all or part of the functions described above.

The specific ways in which each module in the device of this embodiment performs operations have been described in detail in the embodiments related to the method, and thus are not elaborated upon here.

FIG. 27 is a schematic structural diagram of a wireless device (AP and/or STA) according to some exemplary embodiments of the present disclosure. The wireless communication device 2700 includes: a processor 2701, a receiver 2702, a transmitter 2703, a memory 2704, and a bus 2705.

The processor 2701 includes one or more processing cores. By running software programs and modules, the processor 2701 executes various functional applications and information processing. In some embodiments, the processor 2701 may be configured to implement the functions and processes of the aforementioned first processing module and/or the second processing module.

The receiver 2702 and the transmitter 2703 may be implemented as a single communication component, which may be a communication chip. In some embodiments, the receiver 2702 may be configured to implement the functions and processes of the aforementioned first receiving module and/or the second receiving module. In some embodiments, the transmitter 2703 may be configured to implement the functions and processes of the first transmitting module and/or the second transmitting module.

The memory 2704 is connected to the processor 2701 via the bus 2705. The memory 2704 may be configured to store at least one instruction. The processor 2701 is configured to execute the at least one instruction to perform the various processes in the method embodiments described above.

Furthermore, the memory 2704 may be implemented by any type of volatile or non-volatile storage device or a combination thereof, including but not limited to: a magnetic or optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In some embodiments, the receiver 2702 independently receives signals/data, or the processor 2701 controls the receiver 2702 to receive signals/data, or the processor 2701 requests the receiver 2702 to receive signals/data, or the processor 2701 cooperates with the receiver 2702 to receive signals/data.

In some embodiments, the transmitter 2703 independently transmits signals/data, or the processor 2701 controls the transmitter 2703 to transmit signals/data, or the processor 2701 requests the transmitter 2703 to transmit signals/data, or the processor 2701 cooperates with the transmitter 2703 to transmit signals/data.

In an exemplary embodiment of the present disclosure, a computer-readable storage medium is also provided. The computer-readable storage medium stores at least one program, which is loaded and executed by the processor to perform the method for transmitting information or the method for receiving information according to the above method embodiments.

In an exemplary embodiment of the present disclosure, a chip is also provided. The chip includes a programmable logic circuit and/or a program instruction. When the chip runs on a communication device, the chip is used to perform the method for transmitting information or the method for receiving information according to the aforementioned method embodiments.

In an exemplary embodiment of the present disclosure, a computer program product is also provided. The computer program product runs on a processor of a computer device, causing the computer device to perform the aforementioned method for transmitting information or the method for receiving information.

In an exemplary embodiment of the present disclosure, a computer program is also provided. The computer program includes a computer instruction, when executed by a processor of a computer device, cause the computer device to perform the aforementioned method for transmitting information or the method for receiving information.

A person skilled in the art should be aware that in the foregoing one or more examples, the functions described in the embodiments of the present disclosure can be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

It should be understood that the frame formats and element formats illustrated in the embodiments of the present disclosure are exemplary. In different embodiments or designs, it is not excluded situations in which at least one of the designs of the position of each field within the frames/elements, the arrangement order of the field with other fields, the number of bytes occupied by the field, or the number of bits occupied by the field changes. The present disclosure does not impose specific limitations on the formats of these frames and elements.

Described above are merely optional embodiments of the present disclosure and are not used to limit the present disclosure. Any modifications, equivalent substitutions, improvements, and the like made within the spirit and principles of the present disclosure shall be included within the protection scope of the present disclosure.

## Claims

1. A method for transmitting information, performed by a station, the method comprising:
sending first information and/or second information in uplink transmission;
wherein the first information is used to indicate interference to the station, and the second information is used to indicate an adjustment of an operating channel by the station in a case of interference.

2. The method according to claim 1, wherein the first information comprises at least one of following information:
an interference source;
periodic interference or aperiodic interference;
an expected duration of the interference;
an expected start time of the interference;
an expected end time of the interference; or
an interfered subchannel.

3. The method according to claim 2, wherein the interference source comprises at least one of following information:
overlapping basic service set (OBSS) interference;
intra-device interference; or
interference of an unknown type.

4. The method according to any one of claims 1 to 3, wherein the first information is carried in at least one of following information:
a request-to-send (RTS) frame;
a block acknowledgment (BA) frame;
an acknowledgment (ACK) frame;
A-Control of a data frame;
A-Control of a management frame;
an A-Control field of an additional quality of service null (QoS Null) frame; or
an additional management frame.

5. The method according to claim 4, wherein the first information is carried in:
a Block Acknowledgment Control field of the BA frame; or
control information of an A-Control field of the data frame or the management frame; or
an Action field of the management frame.

6. The method according to any one of claims 1 to 5, further comprising:
adjusting to operate on an interference-free subchannel.

7. The method according to claim 6, wherein adjusting to operate on the interference-free subchannel comprises at least one of:
in a case where a secondary channel experiences interference and a primary channel is interference-free, reducing a channel bandwidth of the station to perform transmission and reception on the primary channel;
in a case where a secondary channel experiences interference and at least two contiguous subchannels comprising a primary channel are interference-free, reducing a channel bandwidth of the station to perform transmission and reception on the at least two contiguous subchannels;
in a case where at least one subchannel comprising a primary channel experiences interference and at least one secondary channel is interference-free, reducing a channel bandwidth of the station to perform transmission and reception on the interference-free secondary channel;
in a case where a switching condition is met, switching to a target operating channel different from a current operating channel for transmission and reception;
in a case where an interference type is intra-device interference, keeping an uplink channel bandwidth of the station unchanged, and reducing a downlink channel bandwidth of the station to perform reception on an interference-free subchannel; or
in a case where an interference type is intra-device interference and a switching condition is met, keeping an uplink channel bandwidth of the station unchanged, and switching to a target operating channel different from a current downlink channel for reception.

8. The method according to claim 7, wherein the switching condition comprises at least one of following conditions:
at least one subchannel comprising a primary channel experiences interference;
an interference-free subchannel is a non-contiguous subchannel; or
an entire operating channel bandwidth of the current operating channel experiences interference.

9. The method according to claim 1, wherein the second information comprises at least one of following information:
reducing an operating bandwidth of the station;
performing transmission and reception only on a primary channel, or performing reception only on a primary channel;
performing transmission and reception only on at least one secondary channel, or performing reception only on at least one secondary channel;
whether to switch the operating channel;
a target operating channel after switching;
a switching start time;
a switching completion time; or
a switching delay.

10. The method according to claim 1, wherein the second information comprises at least one of following information:
restoring or increasing an operating bandwidth of the station;
restoring to an operating bandwidth before the interference;
whether to switch the operating channel;
a target operating channel after switching;
a switching start time;
a switching completion time; or
a switching delay.

11. The method according to claim 9 or 10, wherein
in a case where the switching delay is not greater than a first duration, the second information does not need to indicate at least one of the switching delay, the switching completion time, or the switching start time;
in a case where the switching delay is greater than the first duration, the second information carries at least one of the switching delay, the switching completion time, or the switching start time.

12. The method according to claim 9 or 10, wherein the second information is carried in at least one of following frames:
a request-to-send (RTS) frame;
a block acknowledgment (BA) frame;
an acknowledgment (ACK) frame;
A-Control of a data frame;
A-Control of a management frame;
an A-Control field of an additional quality of service null (QoS Null) frame; or
an additional management frame.

13. The method according to claim 12, wherein the second information is carried in at least one of following frames:
a Block Acknowledgment Control field of the BA frame; or
control information of an A-Control field of the data frame or the management frame; or
an Action field of the management frame.

14. The method according to any one of claims 1 to 13, further comprising:
receiving third information in downlink transmission, wherein the third information is used to indicate an adjustment of the operating channel of the station by an access point.

15. The method according to claim 14, wherein the third information is at least one of following information:
whether the station is required to switch the operating channel;
indicating a target operating channel for the station to switch to;
a switching start time;
a switching completion time; or
a switching delay.

16. The method according to claim 14, wherein the third information is carried in at least one of following frames:
a request-to-send (RTS) frame;
a block acknowledgment (BA) frame;
an acknowledgment (ACK) frame;
A-Control of a data frame;
A-Control of a management frame;
an A-Control field of an additional quality of service null (QoS Null) frame;
an additional management frame;
multiuser request-to-send (MU-RTS);
a basic trigger frame; or
clear-to-send (CTS).

17. The method according to claim 16, wherein a user information field of the MU-RTS comprises at least one of:
an Associated Identifier field, used to indicate the station;
a Switching field, used to indicate whether the station indicated by the Associated Identifier field adjusts the operating channel; or
a Sart-of-Switching Time field, used to indicate a time at which the station indicated by the Associated Identifier field starts to adjust the operating channel.

18. The method according to claim 16, wherein a user information list of the RTS comprises a User Information field and a User Information Extension field that appear in pairs; wherein
the User Information field is used to indicate the station and allocate a resource unit to the station; and
the User Information Extension field comprises a Switching field and/or a Start-of-Switching field; wherein
the Switching field is used to indicate whether the station adjusts the operating channel, wherein in a case where the station adjusts the operating channel, a target operating channel is a subchannel on which a resource unit allocated to the station is located;
a Start-of-Switching Time field is used to indicate a time at which the station starts to adjust the operating channel.

19. The method according to any one of claims 6 to 18, further comprising:
adjusting, in a case where the interference ends, the operating channel to a state at start of a first transmission opportunity; or
adjusting, in a case where a first transmission opportunity ends, the operating channel to a state at start of the first transmission opportunity,
wherein the first transmission opportunity is a transmission opportunity used by the station.

20. The method according to any one of claims 1 to 19, wherein a holder of a first transmission opportunity used by the station is an access point.

21. The method according to any one of claims 1 to 19, wherein a holder of a first transmission opportunity used by the station is the station, and the method further comprises:
receiving a block acknowledgment (BA)/acknowledgment (ACK) frame on a target operating channel indicated by the station, wherein the BA/ACK frame is transmitted using a multiuser (MU) physical layer protocol data unit (PPDU) or a non-high throughput (Non-HT) duplicate PPDU.

22. A method for receiving information, performed by an access point, the method comprising:
receiving first information and/or second information of a station in uplink transmission,
wherein the first information is used to indicate interference to the station, and the second information is used to indicate an adjustment of an operating channel by the station in a case of interference.

23. The method according to claim 22, wherein the first information comprises at least one of following information:
an interference source;
periodicity of the interference;
an expected duration of the interference;
a start time of the interference;
an end time of the interference; or
an interfered subchannel.

24. The method according to claim 23, wherein the interference source comprises at least one of following information:
overlapping basic service set (OBSS) interference;
intra-device interference; or
interference of an unknown type.

25. The method according to any one of claims 22 to 24, wherein the first information is carried in at least one of:
a request-to-send (RTS) frame;
a block acknowledgment (BA) frame;
an acknowledgment (ACK) frame;
A-Control of a data frame;
A-Control of a management frame;
an A-Control field of an additional quality of service null (QoS Null) frame; or
an additional management frame.

26. The method according to claim 25, wherein the first information is carried in:
a Block Acknowledgment Control field of the BA frame; or
control information of an A-Control field of the data frame or the management frame; or
an Action field of the management frame.

27. The method according to claim 22, wherein the second information comprises at least one of:
reducing an operating bandwidth of the station;
performing transmission and reception, or reception only on a primary channel;
performing transmission and reception, or reception only on at least one secondary channel;
whether to switch the operating channel;
a target operating channel after switching;
a switching start time;
a switching completion time;
a switching delay;
restoring or increasing an operating bandwidth of the station; or
restoring to an operating bandwidth before the interference.

28. The method according to claim 22, wherein the second information is carried in at least one of following frames:
a request-to-send (RTS) frame;
a block acknowledgment (BA) frame;
an acknowledgment (ACK) frame;
A-Control of a data frame;
A-Control of a management frame;
an A-Control field of an additional quality of service null (QoS Null) frame; or
an additional management frame.

29. The method according to claim 28, wherein the second information is carried in at least one of following frames:
a Block Acknowledgment Control field of the BA frame; or
control information of an A-Control field of the data frame or the management frame; or
an Action field of the management frame.

30. The method according to claim 22, further comprising:
scheduling transmission of the station on an interference-free subchannel.

31. The method according to claim 22, further comprising:
maintaining, in a case where a part of stations in a first transmission period experience interference on a primary channel, transmission on the primary channel,
wherein the first transmission period is a part of a first transmission opportunity, wherein the first transmission opportunity is a transmission opportunity corresponding to a station that sends the first information.

32. The method according to claim 22, further comprising:
sending, in a case where all stations in a first transmission period experience interference on a primary channel, a physical layer protocol data unit (PPDU) used to occupy a channel on the primary channel,
wherein the first transmission period is a part of a first transmission opportunity, wherein the first transmission opportunity is a transmission opportunity corresponding to a station that sends the first information.

33. The method according to claim 32, wherein the PPDU comprises:
a preamble; or
a load; or
a preamble and a load; or
a Data field carrying a clear-to-send (CTS) frame; or
a Data field carrying a quality of service null (QoS Null) frame.

34. The method according to claim 22, further comprising:
scheduling, in a case where all stations in a first transmission period experience interference on a primary channel, transmission of other stations in a second transmission opportunity on the primary channel,
wherein the first transmission period is a part of a first transmission opportunity, wherein the first transmission opportunity is a transmission opportunity corresponding to a station that sends the first information.

35. The method according to claim 22, further comprising:
suspending downlink transmission with the station;
wherein a number of suspensions is related to a switching delay or a switching completion time.

36. The method according to claim 22, further comprising:
sending a downlink trigger frame on an interference-free subchannel over a non-high throughput (Non-HT) duplicate physical layer protocol data unit (PPDU).

37. The method according to claim 22, further comprising:
sending, in a case where one station is present in a first transmission opportunity, subsequent to waiting for an idle duration of a target operating channel indicated by the second information to reach a second duration, a physical layer protocol data unit (PPDU) used to occupy a channel on a target operating channel;
wherein the first transmission opportunity is a transmission opportunity corresponding to a station that sends the second information.

38. The method according to any one of claims 22 to 37, further comprising:
sending third information in downlink transmission, wherein the third information is used to indicate an adjustment of the operating channel of the station by the access point.

39. The method according to claim 38, wherein the third information is used to indicate at least one of following information:
whether the station is required to switch the operating channel;
indicating a target operating channel for the station to switch to;
a switching start time; or
a switching completion time.

40. The method according to claim 38, wherein the third information is carried in at least one of following frames:
a request-to-send (RTS) frame;
a block acknowledgment (BA) frame;
an acknowledgment (ACK) frame;
A-Control of a data frame;
A-Control of a management frame;
an A-Control field of an additional quality of service null (QoS Null) frame;
an additional management frame;
multiuser (MU)-RTS;
a basic trigger frame; or
clear-to-send (CTS).

41. The method according to claim 40, wherein a User Information field of the MU-RTS comprises at least one of:
an Associated Identifier field, used to indicate the station;
a Switching field, used to indicate whether the station indicated by the Associated Identifier field adjusts the operating channel; or
a Sart-of-Switching Time field, used to indicate a time at which the station indicated by the Associated Identifier field starts to adjust the operating channel.

42. The method according to claim 40, wherein a user information list of the basic trigger frame comprises a User Information field and a User Information Extension field that appear in pairs; wherein
the User Information field is used to indicate the station and allocate a resource unit to the station; and
the User Information Extension field comprises a Switching field and/or a Start-of-Switching field; wherein
the Switching field is used to indicate whether the station adjusts the operating channel, wherein in a case where the station adjusts the operating channel, a target operating channel is a subchannel on which the resource unit allocated to the station is located; and
the Start-of-Switching Time field is used to indicate a time at which the station starts to adjust the operating channel.

43. The method according to any one of claims 22 to 42, further comprising:
switching a primary channel.

44. The method according to claim 43, wherein switching the primary channel comprises at least one of:
switching the primary channel in all current subchannels; or
switching the primary channel in all current subchannels and reducing an operating channel bandwidth of the access point.

45. The method according to any one of claims 22 to 44, wherein a holder of a first transmission opportunity used by the station is an access point.

46. The method according to any one of claims 22 to 44, wherein a holder of a first transmission opportunity used by the station is the station, and the method further comprises:
sending a block acknowledgment (BA)/acknowledgment (ACK) frame on a target operating channel indicated by the station, wherein the BA/ACK frame is transmitted using a multiuser (MU) physical layer protocol data unit (PPDU) or a non-high throughput (Non-HT) duplicate PPDU.

47. An apparatus for transmitting information, comprising:
a first sending module, configured to send first information and/or second information in uplink transmission,
wherein the first information is used to indicate interference to the apparatus, and the second information is used to indicate an adjustment of an operating channel by the apparatus in a case of interference.

48. An apparatus for receiving information, comprising:
a second receiving module, configured to receive first information and/or second information of a station in uplink transmission,
wherein the first information is used to indicate interference to the station, and the second information is used to indicate an adjustment of an operating channel by the station in a case of interference.

49. A wireless device, comprising:
a processor;
a transceiver, connected to the processor; and
a memory, configured to store an instruction executable by the processor,
wherein the processor, when loading and executing the instructions, is caused to perform the method for transmitting information as defined in any one of claims 1 to 21, and/or the method for receiving information as defined in any one of claims 22 to 46.

50. A computer-readable storage medium storing an executable instruction, wherein the executable instructions, when loaded and executed by a processor, cause the processor to perform the method for transmitting information as defined in any one of claims 1 to 21, and/or the method for receiving information as defined in any one of claims 22 to 46.

51. A chip, comprising a programmable logic circuit or a program, wherein the chip, when running the programmable logic circuit and/or the program, is caused to perform the method for transmitting information as defined in any one of claims 1 to 21, and/or the method for receiving information as defined in any one of claims 22 to 46.

52. A computer program product, comprising a computer instruction stored in a computer-readable storage medium, wherein the computer instruction, when read by a processor of a communication device from the computer-readable storage medium and executed by the processor, cause the communication device to perform the method for transmitting information as defined in any one of claims 1 to 21, and/or the method for receiving information as defined in any one of claims 22 to 46.

53. A computer program, comprising a computer instruction, wherein the computer instruction, when executed by a processor of a communication device, cause the communication device to perform the method for transmitting information as defined in any one of claims 1 to 21, and/or the method for receiving information as defined in any one of claims 22 to 46.
